Europäisches Patentamt

European Patent Office

Office européen des brevets

(19)

(11) EP 0 678 732 B1

(12) **FASCICULE DE BREVET EUROPEEN**

(45) Date de publication et mention
de la délivrance du brevet:
**21.01.1998 Bulletin 1998/04**

(51) Int Cl.⁶: **G01C 25/00**, G05D 1/08,
B64G 1/28

(21) Numéro de dépôt: **94400848.1**

(22) Date de dépôt: **19.04.1994**

(54) **Procédé et appareil de calibration des gyromètres d'un satellite stabilisé 3-axes**

Verfahren und Vorrichtung zum Kalibrieren der Kreiseln eines dreiachsenstabilisierten Satelliten

Procedure and device for calibrating the gyrometers of a three-axis stabilized satellite

(84) Etats contractants désignés:
**DE GB IT**

(43) Date de publication de la demande:
**25.10.1995 Bulletin 1995/43**

(73) Titulaire: **AEROSPATIALE Société Nationale Industrielle**
**75781 Paris Cédex 16 (FR)**

(72) Inventeurs:
• **Achkar, Issam-Maurice**
**F-06150 Cannes La Bocca (FR)**
• **Renaud, Pierre-Yves, Rés. "Les Heures Claires"**
**F-06210 Mandelieu (FR)**

• **Sghedoni, Michel**
**F-06400 Cannes (FR)**
• **Guillermin, Pierre**
**F-06200 Nice (FR)**

(74) Mandataire: **Rinuy, Santarelli**
**14, avenue de la Grande Armée**
**75017 Paris (FR)**

(56) Documents cités:
**EP-A- 0 148 550**      **EP-A- 0 371 344**
**FR-A- 2 522 614**      **FR-A- 2 583 873**
**FR-A- 2 622 001**      **FR-A- 2 637 564**
**FR-A- 2 637 565**

Printed by Jouve, 75001 PARIS (FR)

## Description

L'invention concerne un dispositif et un procédé de calibration des dérives gyromètriques pour un satellite en orbite équatoriale ou à faible inclinaison sur l'Equateur (typiquement inférieure à 10° environ) muni d'au moins un détecteur de Soleil, un détecteur de Terre ou de l'Etoile Polaire, de gyromètres (intégrateurs ou non) et stabilisé selon 3 axes à l'aide d'un ensemble de tuyères.

Ainsi qu'on le sait, les 3 axes selon lesquels on cherche à stabiliser en attitude un satellite sont respectivement un axe couramment noté Z et appelé axe de lacet, un axe noté Y et appelé axe de tangage et un axe X complétant le trièdre orthonormé direct et appelé axe de roulis. La stabilisation en attitude du satellite consiste à maintenir ce trièdre parallèle (voire confondu) avec un trièdre théorique (ou de référence) qui est formé par exemple, dans le cas d'une orbite circulaire, d'un axe Zr dirigé vers la Terre, d'un axe Yr perpendiculaire au plan de l'orbite et d'un axe Xr de même sens que la vitesse de défilement. D'autres types de trièdres de référence sont classiquement envisagés selon les types d'orbite et les types de capteurs équipant le satellite. On appelle trièdre orbital local instantané (il dépend du point de l'orbite ou se trouve le satellite à l'instant considéré) usuellement noté Xo, Yo, Zo, le trièdre théorique auquel on cherche ainsi à superposer le trièdre X, Y, Z du satellite.

En plus, tout satellite de télécommunications ou d'observation (ce sont des missions typiques des satellites), stabilisé 3-axes aussi bien en orbite de transfert qu'en orbite finale, dispose d'au moins un capteur solaire (1-axe ou 2-axes), un capteur de Terre 2-axes ou bien un capteur de Polaire 2-axes pour la détection des erreurs d'attitude (en roulis et tangage pour le capteur de Terre, en roulis et lacet pour le capteur de Polaire, et en une combinaison des 3 angles pour le capteur solaire), ainsi que de gyromètres pour la mesure de vitesses angulaires sur les trois axes.

La génération de couples de commande pour le changement d'attitude et/ou celui des vitesses angulaires du satellite se fait en général à l'aide d'actionneurs tels que des roues (cinétiques ou de réaction) ou des tuyères. En outre, il existe à bord de ce type de satellite au moins un moteur d'apogée (en pratique une tuyère) pour passer sur une orbite nominale de service à partir de l'orbite de transfert et un ensemble de tuyères pour maintenir ensuite (en phase opérationnelle) le satellite sur son orbite et dans une attitude appropriée.

Cet ensemble de détecteurs (ou capteurs) et d'actionneurs associés à une ou plusieurs électroniques pour le traitement des mesures et le calcul des couples de commande constitue ce qu'on appelle couramment le "système de contrôle d'attitude et d'orbite (SCAO)" du satellite.

Au cours de la vie du satellite il est indispensable de pouvoir estimer, à un moment ou un autre, les dérives des gyromètres, tout au moins la partie constante (biais) de ces dérives. En particulier, pour un satellite équipé d'un capteur de Terre, lorsque celui-là est sur son orbite de transfert et pendant la phase de changement d'orbite - mode de poussée d'apogée -, il arrive que ce capteur terrestre ne soit plus en visibilité de la Terre et que l'on ait à maintenir l'attitude du satellite uniquement à l'aide des mesures effectuées par les autres capteurs, notamment par le (ou les) capteur(s) solaire(s), et les gyromètres (intégrateurs ou non).

De la même manière, pendant les manoeuvres de maintien d'orbite (en anglais "station-keeping") sur l'orbite nominale, il est préférable de pouvoir mesurer les vitesses angulaires du satellite avec une bonne précision afin d'amortir rapidement les perturbations d'attitude engendrées par les mésalignements (difficiles à éviter en pratique) des tuyères de maintien d'orbite.

Dans tous ces cas les mesures de vitesse angulaire par les gyromètres sont nécessaires pour la stabilité du contrôle d'attitude. Or, en pratique, ces mesures sont souvent biaisées à cause précisément des dérives gyromètriques, l'ordre de grandeur du biais étant typiquement de quelques degrés par heure, ce qui risque d'affecter sensiblement les performances du contrôle.

En outre, les conséquences de ces dérives sont encore plus importantes si l'on intègre ces mesures (en remplacement de mesures de position par un capteur optique) sans compenser les biais pendant une certaine durée : il en résulte alors une erreur importante sur l'estimation des angles d'attitude et par voie de conséquence une dégradation du pointage du satellite.

A titre d'exemple, pour une manoeuvre typique de changement d'orbite depuis l'orbite de transfert il faut que l'attitude du satellite soit maintenue pendant 1 heure environ avec les gyromètres et les capteurs solaires. Si les dérives des gyromètres ne sont pas alors compensées, l'erreur qui en découle sur l'orientation de la poussée peut alors entraîner le satellite sur une orbite intermédiaire bien différente de celle désirée (erreur pouvant atteindre plusieurs centaines de kilomètres pour une dérive de quelques °/h).

Afin d'éviter ce genre de situation, les gyromètres doivent en pratique être calibrés au moins une fois, sur l'orbite de transfert voire ultérieurement sur l'orbite finale, et tel est l'objectif du procédé et dispositif de la présente invention.

Des concepts de calibration des gyromètres pour un satellite stabilisé 3-axes utilisant des détecteurs solaire et terrestre sont déjà connus et font, entre autres, l'objet du brevet FR-2.583.873 ou EP-209.429 de MATRA (invention de LAM Do Mau et BENOIT Alain) pour "Procédé et dispositif d'injection de satellite sur orbite géostationnaire avec stabilisation suivant les trois axes", et du brevet FR-2.622.001 (ou DE-3.734.941 ou US-4.884.771) de MESSERSCHMITT-BOLKOW-BLOM (invention de BRUDERLE E.) pour "Calibrating gyroscope of three-axis stabilized satellite".

Dans le premier brevet, seules les dérives des gyromètres de roulis et de lacet sont calibrées en maintenant l'axe de lacet du satellite parallèle à lui-même, alors que le second brevet décrit une procédure semblable à celle du premier applicable pour l'estimation de la dérive d'un gyromètre d'axe quelconque, le satellite étant toutefois aligné successivement suivant deux positions de référence.

Par ailleurs, des systèmes de contrôle d'attitude d'un satellite utilisant, en plus des détecteurs solaire et terrestre, un détecteur stellaire sont déjà connus et font, entre autres, l'objet du brevet FR-2.522.614 du CENTRE NATIONAL D'ETUDES SPATIALES (invention de MOUILHARAT Guy, DUCHON Paul A., GUILBERT Jean-Michel A., et ROLFO André A.) pour "Configuration de satellite à orbite équatoriale à moyens solaires perfectionnés" et du brevet FR-2.637.565 de l'AEROSPATIALE (invention de MAUTE Patrick) pour "Système de contrôle actif selon trois axes d'un satellite géostationnaire". Toutefois, dans ces deux brevets, rien n'est prévu pour la calibration des dérives gyromètriques que ce soit en transfert ou à poste.

L'utilisation des méthodes de filtrage classique tel que le filtre de KALMAN a par ailleurs été proposée par GRAY C.W., HERMAN L.K., KOLVE D.I. et WESTERLUND G.L. - dans "On-Orbit Attitude Reference Alignment and Calibration", AAS paper No. 90-042 - pour l'estimation conjointe des erreurs d'attitude du satellite, des erreurs d'alignement d'un capteur stellaire et des facteurs d'échelle, mésalignements et dérives constantes (biais) d'un ensemble de gyromètres 3-axes. Pour ce faire, ce document enseigne d'enregistrer les mesures du détecteur stellaire et celles effectuées par les gyromètres lors des manoeuvres de pointage prescrites par la mission et on les traite en temps différé (soit à bord soit au sol) afin de reconstituer a posteriori l'attitude du satellite et d'estimer les mésalignements du capteur et les mésalignements, facteurs d'échelle et dérives des gyromètres.

L'invention a pour objet de calibrer les dérives gyrométrique (au moins en ce qui concerne leur partie constante) et ce avec une bien plus grande précision que dans les solutions connues (c'est-à-dire meilleure que de l'ordre de 0,1°/h).

Elle part en fait de la constatation que ces solutions connues pour calibrer les gyromètres procèdent toutes en temps différé, sans réelle validation des évaluations faites des dérives gyrométriques (au moins des biais constants de ces dérives).

L'invention propose, pour améliorer la précision du contrôle d'attitude qui peut être atteinte avec les gyromètres, de valider en temps réel les estimations des dérives gyrométriques en utilisant ces dérives estimées en tant que correctifs des mesures données par ces gyromètres et appliquées aux étages de pilotage d'attitude du satellite. L'invention enseigne en outre d'estimer, non seulement les dérives gyrométriques, mais aussi l'attitude même du satellite.

Plus précisément l'invention propose un procédé de calibration d'un ensemble de gyromètres dont est muni un satellite stabilisé 3-axes circulant sur une orbite, ce satellite comportant un ensemble de détection d'attitude incluant cet ensemble de gyromètres, un ensemble d'actionneurs et une logique de commande adaptée à appliquer à l'ensemble d'actionneurs des signaux de commande à partir de signaux de mesure fournis par l'ensemble de détection d'attitude, ce procédé selon lequel, à partir d'un instant to, on estime conjointement les erreurs d'attitude de ce satellite par rapport à un trièdre de référence avec des dérives constantes de cet ensemble de gyromètres autour de trois axes XYZ de ce satellite, étant caractérisé en ce que l'on applique en temps réel à cette logique de commande les valeurs estimées des erreurs d'attitude et la différence des mesures de vitesse ω de l'ensemble de gyromètres et des valeurs estimées des dérives constantes, et on stocke ces valeurs estimées des dérives constantes lorsque celles-ci deviennent constantes à une première tolérance prédéterminée près et les valeurs estimées des erreurs d'attitude deviennent constantes à une seconde tolérance près.

On appréciera que l'invention procède à une estimation (en pratique du type filtrage de KALMAN) pour la reconstitution de l'attitude et des dérives constantes des gyromètres, en temps réel (à bord ou au sol) en utilisant les mesures des capteurs solaire, terrestre ou polaire disponibles, tout en maintenant le satellite dans une attitude de référence unique (cette attitude de référence est par exemple une attitude fixe dans l'espace inertiel, ou une attitude pointé-Terre en cas d'utilisation d'un capteur de Terre).

Par rapport au document MATRA précité, l'invention se distingue notamment par le fait qu'elle estime à la fois l'attitude et les dérives constantes (que ce soit en orbite de transfert ou en orbite opérationnelle) en appliquant en temps réel aussi bien les dérives estimées que l'attitude estimée, à la loi de contrôle d'attitude.

Selon des dispositions préférées de l'invention, éventuellement combinées :

- la première tolérance près est de l'ordre de 0,1°/h et la seconde tolérance est de l'ordre de 0,5°,
- on estime les erreurs d'attitude E1 et les dérives constantes E2 à l'aide d'un filtre de KALMAN défini en notation discrète, par les équations :

$$Xp(k+1) = F * X(k) + G * A(k) + D$$

$$X(k+1) = Xp(k+1) + K(k+1) * [Z(k+1) - H(k+1) * Xp(k+1)]$$

où :

- k est un indice d'échantillonnage associé à l'instant t tel que t-to=k*Ts si Ts est le pas d'échantillonnage,
- X(k) est un vecteur colonne formé de trois valeurs d'attitude et de trois valeurs de dérives à l'instant k, par rapport au trièdre de référence,
- A(k) est un vecteur colonne formé de trois incréments de rotation à l'instant k, du satellite par rapport au trièdre de référence depuis l'instant (k-1),
- Z(k+1) est un vecteur colonne de mesure formé d'une pluralité $\underline{n}$ de signaux d'erreur définis chacun à l'instant (k+1) par la différence d'un signal de mesure fourni par l'ensemble de détection et d'un signal de consigne,
- Xp(k+1) est un vecteur colonne à six termes, prédit par la première équation pour l'instant (k+1),
- X(k+1) est un vecteur colonne à six termes, estimé à l'instant (k+1) selon la seconde équation à partir de Xp(k+1) et de Z(k+1),
- K(k+1) est une matrice de gains à six lignes et $\underline{n}$ colonnes,
- F et G sont des matrices d'état à termes constants, formées respectivement de six lignes et six colonnes et de six lignes et trois colonnes, décrivant des influences respectives théoriques de x(k) et A(k) sur X(k+1),
- D est un vecteur colonne formé de trois termes décrivant l'attitude du trièdre de référence à l'instant (k+1) par rapport au trièdre de référence à l'instant k et de trois termes nuls, tous les termes de D étant nuls dans le cas où le trièdre de référence reste fixe,
- H(k+1) est une matrice d'observation à $\underline{n}$ lignes et six colonnes dont les termes à l'instant (k+1) sont déterminables de façon prédéterminée, cette matrice décrivant des relations théoriques existant à tout instant (k+1) entre Z(k+1) et X(k+1),

- la première équation se décompose en :

$$E1(k+1) = E1(k) - Ts*E2(k) + A(k) + D1$$

$$E2(k+1) = E2(k)$$

où :

- E1(k) et E1(k+1) sont formés de trois valeurs d'attitude de X(k) et de X(k+1),
- E2(k) et E2(k+1) sont formés des trois valeurs de dérives de X(k) et de X(k+1)
- D1 est formé des trois premiers termes de D et la matrice H s'écrit :

$$H(k+1) = |\ C(k+1)\ \vdots\ 0n3\ |$$

ou :
- 0n3 est une matrice nulle à n lignes et trois colonnes,
- C(k+1) est une matrice à n lignes et trois colonnes telle que l'on puisse écrire l'équation théorique :

$$Z(k+1) = C(k+1) * E1(k+1)$$

- Z(k+1) est formé d'au moins deux termes déduits de deux mesures d'un capteur de Terre ou d'Etoile, et d'au moins un terme déduit d'une mesure d'un capteur solaire 1-axe,
- le trièdre de référence est fixe dans l'espace,
- l'orbite du satellite est une orbite de transfert,
- l'ensemble de détection d'attitude est formé d'au moins un capteur solaire 1-axe et d'un détecteur de Terre, et le trièdre de référence est un trièdre direct (Xr, Yr, Zr) tel que Yr est normal au plan de l'orbite, Zr est pointé vers la Terre à partir de la position orbitale du satellite à l'instant to et Xr est de même sens que la vitesse de défilement du satellite à l'instant to,
- l'ensemble de détection d'attitude est formé d'au moins un capteur solaire 1-axe et d'un détecteur stellaire pointé sur l'Etoile Polaire, l'orbite du satellite est à inclinaison au plus égale à 10° environ, et le trièdre de référence est un trièdre direct (Xr, Yr, Zr) tel que Yr est pointé vers le Sud géographique et Zr normal à la direction solaire (S) à l'instant to,

- le trièdre de référence est un trièdre Xr, Yr, Zr, tel que, à chaque instant, Yr est perpendiculaire au plan orbital, Zr est pointé vers la Terre et Xr est de même sens que la vitesse de défilement du satellite sur son orbite,
- le satellite est sur une orbite circulaire,
- l'ensemble de détection d'attitude comporte au moins un capteur solaire 1-axe et un capteur terrestre 2-axes,
- le satellite est sur une orbite d'inclinaison au plus égale à 10° environ et l'ensemble de détection d'attitude comporte au moins un capteur solaire 1-axe et un capteur stellaire 2-axes destiné à être pointé sur l'Etoile Polaire.

L'invention propose également un dispositif de contrôle d'attitude d'un satellite stabilisé 3-axes circulant sur une orbite, comportant un ensemble de détection d'attitude incluant un ensemble de gyromètres et un ensemble d'actionneurs commandé par une logique de commande dont l'entrée est connectée par une liaison à la sortie de l'ensemble de détection d'attitude, caractérisé en ce qu'il comporte en outre, en parallèle avec ladite liaison, un bloc d'estimation adapté à recevoir en entrée des valeurs instantanées de l'attitude du satellite par rapport à un trièdre de référence prédéterminé, et des mesures instantanées des gyromètres et à fournir en sortie des valeurs estimées de l'attitude du satellite et des dérives constantes des gyromètres, un ensemble de commutation étant prévu pour appliquer à la logique de commande, soit uniquement les sorties de l'ensemble de détection, soit les valeurs estimées fournies par le bloc d'estimation.

Selon d'autres dispositions préférées de l'invention, éventuellement combinées :

- que l'ensemble de détection d'attitude comporte au moins un capteur solaire 1-axe et un capteur terrestre 2-axes,
- l'ensemble de détection d'attitude comporte au moins un capteur solaire 1-axe et un capteur stellaire 2-axes destiné à être pointé sur l'Etoile Polaire,
- la logique de commande comporte un ensemble de régulateurs linéaires et de limiteurs, d'un ensemble de filtres et d'un ensemble de modulateurs non linéaires,
- les régulateurs linéaires sont du type Proportionnel-Dérivé,
- les régulateurs linéaires sont du type Proportionnel-Intégral-Dérivé,
- les filtres sont digitaux du second ordre,
- les modulateurs sont de type PRM (Pseudo-Rate Modulator),
- les modulateurs sont de type PWPF (Pulse-Width Pulse Frequency Modulator).

Des objets, caractéristiques et avantages de l'invention ressortent de la description qui suit, donnée à titre d'exemple non limitatif, en regard des dessins annexés sur lesquels :

- la figure 1A est une vue schématique du système de contrôle d'attitude et de correction d'orbite (SCAO) d'un satellite adapté à la mise en oeuvre de l'invention,
- la figure 1B est une vue schématique du SCAO d'un autre satellite adapté à la mise en oeuvre de l'invention,
- la figure 2A est un schéma de principe de l'orbite et des repères du satellite de la figure 1A au cours d'une phase de calibration en orbite de transfert,
- la figure 2B est un schéma de principe de l'orbite et des repères du satellite de la figure 1B au cours d'une phase de calibration en orbite de transfert,
- la figure 3 est un schéma fonctionnel du système de contrôle d'attitude et de correction d'orbite,
- la figure 4 est un schéma de principe du bloc 24 de régulateurs et de limiteurs de la figure 3,
- la figure 5 est un schéma de principe du bloc 25 de filtres de la figure 3,
- la figure 6 est un schéma de principe d'un modulateur 26 de la figure 3,
- la figure 7 est un diagramme fonctionnel de l'algorithme 22 d'estimation de l'attitude et des dérives gyrométriques,
- les figures 8A à 8D sont des diagrammes développés de cet algorithme pour le satellite en orbite de transfert, avec 1 ou 2 capteurs solaires, et avec un capteur de Terre ou de Polaire, respectivement,
- les figures 9A et 9D sont des diagrammes développés de cet algorithme pour le satellite en orbite opérationnelle, avec 1 ou 2 capteurs solaires, et avec un capteur de Terre ou de Polaire, respectivement,
- la figure 10 est un diagramme général de l'étape d'estimation de la figure 7 et de l'étape ultérieure de prise en compte des valeurs estimées pour la commande des tuyères,
- les figures 11A à 11C sont des graphiques montrant les variations avec le temps de deux valeurs de mesure solaires et d'une valeur de mesure en roulis obtenue par un capteur terrestre,
- les figures 11D à 11F sont des graphiques montrant les variations avec le temps des mesures de gyromètres en roulis, tangage et lacet,
- les figures 11G à 11I sont des graphiques montrant les variations avec le temps des valeurs estimées, selon l'invention, des angles de roulis, tangage, lacet,

- les figures 11J à 11L sont des graphiques montrant les variations avec le temps des valeurs estimées des dérives en roulis, tangage et lacet, et
- les figures 12A à 12L sont des figures similaires aux figures 11A à 11L, dans le cas de deux mesures solaires et de deux mesures (roulis et lacet) stellaires.

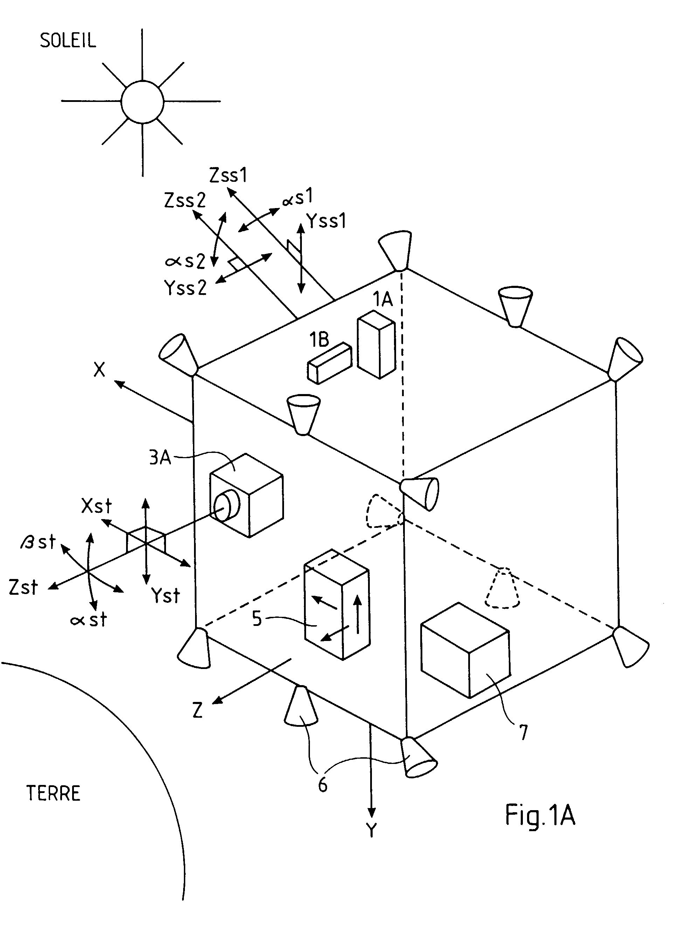

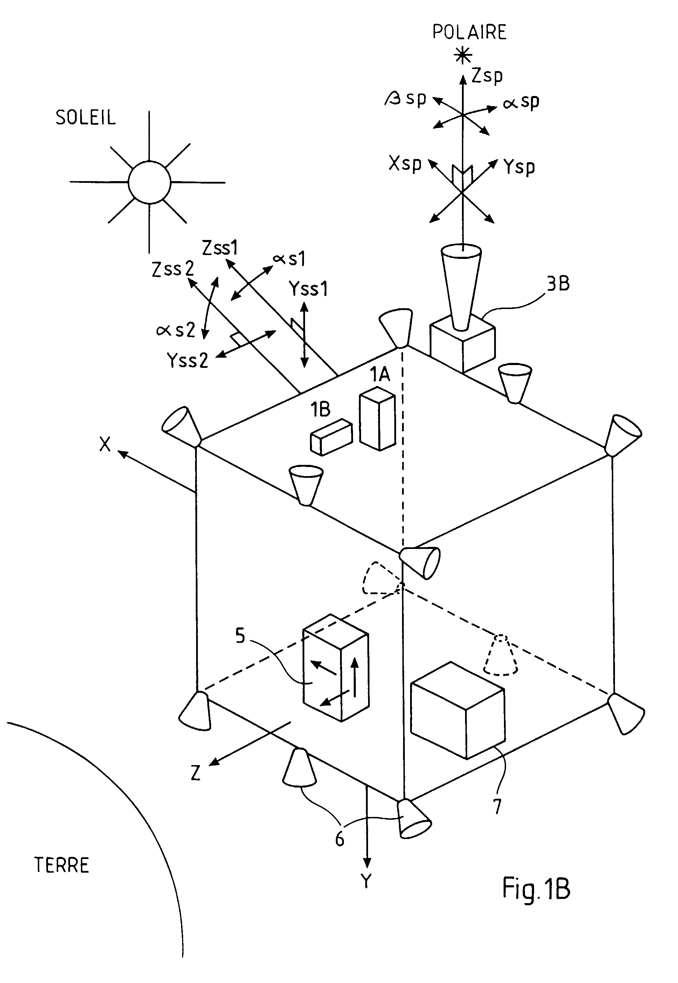

Les figures 1A et 1B représentent schématiquement un satellite stabilisé 3-axes, défini par son trièdre XYZ et comprenant divers équipements classiques (générateurs, antennes, etc...) non représentés, et équipé typiquement d'un système de contrôle d'attitude et d'orbite qui comprend :

- au moins un capteur solaire 1-axe repéré 1 (de tout type connu approprié). Toutefois comme un système type de contrôle d'attitude comporte très souvent au moins un ensemble de détection solaire 2-axes, la description qui suit tient aussi compte d'une configuration 2-axes qui permet d'améliorer la qualité de l'estimation des dérives gyrométriques. Sur les figures 1A et 1B est schématisé un tel ensemble de détection 2-axes typique forme de deux capteurs solaires 1-axe repérés 1A et 1B (ou bien un capteur solaire 2-axes), ayant leurs axes optiques (ou de mesure) Zss1, Zss2 parallèles ou proches du plan (X, Z) et des champs de vue suffisamment larges et ortho-gonaux entre eux (typiquement ($\pm$ 60°) x ($\pm$ 60°)) permettant ainsi de déterminer la direction du Soleil dans les axes satellite XYZ,
- un capteur optique 2-axes qui peut détecter soit la Terre (typiquement capteur d'horizon Infra-Rouge) soit l'Etoile Polaire (typiquement capteur à matrice CCD).

  * 1er cas : le capteur de Terre 3A de la figure 1A a son axe optique Zst parallèle ou proche de l'axe Z du satellite (Xst et Yst désignant ses axes sensibles) et permet de mesurer, en visibilité de la Terre, les erreurs d'attitude en roulis (autour de X) et en tangage (autour de Y).
  * 2ème cas : le capteur de Polaire 3B de la figure 1B a un champ de vue suffisamment large - typiquement deux fois la valeur (inclinaison orbitale + 3°) - et disposé tel que son axe optique Zsp soit parallèle ou proche de l'axe (-Y) et en ayant, de préférence, ses axes sensibles Xsp et Ysp parallèles respectivement aux axes X et Z du satellite . En outre, la sensibilité de ce capteur est telle qu'il peut détecter la Polaire, de magnitude visuelle proche de 2,3, de manière à définir les composantes de sa direction dans les axes satellite et d'en déduire les angles de roulis (autour de X) et de lacet (autour de Z),

- un bloc de gyromètres 5 pouvant détecter les vitesses angulaires du satellite autour des 3 axes,
- un ensemble d'actionneurs tel que des tuyères 6 - typiquement au nombre de 12 - pouvant générer des couples de commande négatifs ou positifs autour des 3 axes,
- une ou plusieurs électroniques analogiques ou digitales 7 pour le traitement des mesures effectuées par les capteurs, le calcul de l'anomalie vraie du satellite sur son orbite (si nécessaire), l'estimation de l'attitude et des dérives gyrométriques et pour l'élaboration de commandes vers les actionneurs (lois de contrôle, filtres, limiteurs et modulateurs).

Selon l'invention, au cours d'une phase de calibration, on estime l'attitude du satellite et les dérives des gyromètres (du moins les parties constantes de celles-ci, ou biais) en utilisant en temps réel les valeurs estimées en sorte de stabiliser le satellite pour maintenir autant que possible son trièdre satellite XYZ parallèle à un trièdre de référence. Plus précisément :

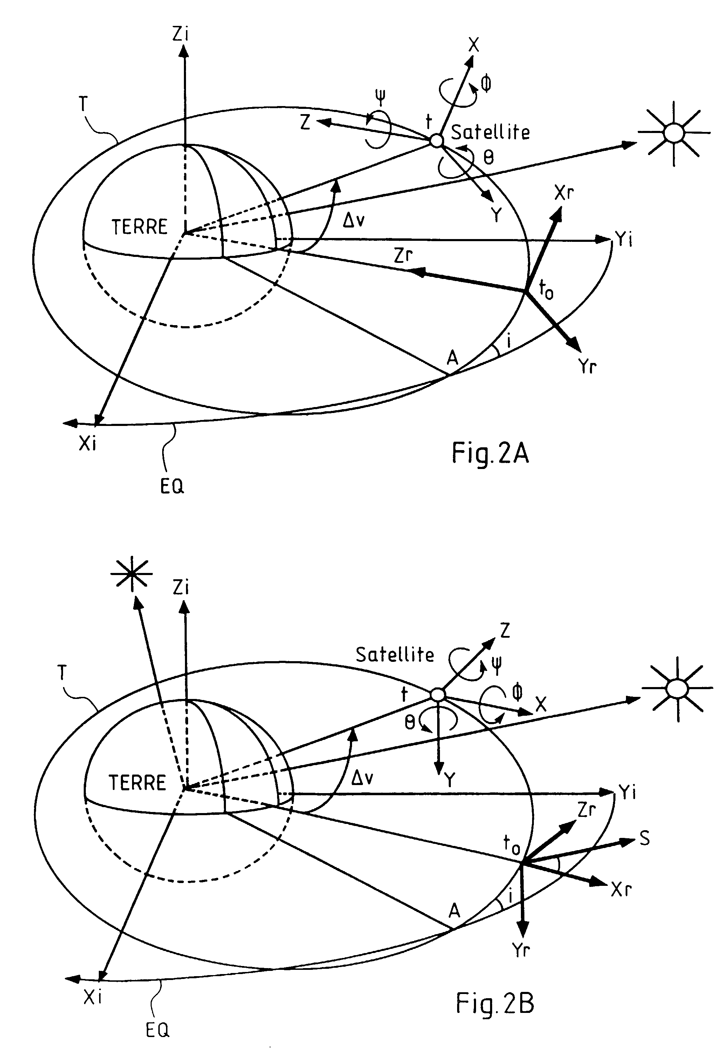

a. sur l'orbite de transfert (et généralement après le mode d'acquisition Terre) on estime les dérives des gyromètres pour les besoins du mode ultérieur de poussée d'apogée (Apogée Boost Mode ou ABM, en anglais) au cours duquel ces gyromètres jouent un rôle essentiel dans le contrôle d'attitude suivant les trois axes. Dans ce cas, le trièdre de référence pour l'attitude est avantageusement fixe dans l'espace ; il s'agit de préférence du trièdre XrYrZr défini par la figure 2A dans le cas d'un capteur de Terre ou par la figure 2B dans le cas d'un capteur de Polaire, l'orientation du trièdre satellite XYZ par rapport à ce trièdre de référence étant définie par les angles de roulis $\Phi$, de tangage $\Theta$ et de lacet $\Psi$ ;

b. sur l'orbite opérationnelle (mode normal) on estime les dérives des gyromètres pour les besoins ultérieurs de maintien à poste (ou "station-keeping") où ces gyromètres jouent, là aussi, un rôle primordial dans le contrôle d'attitude suivant les trois axes. Dans ce cas le trièdre de référence pour l'attitude est de préférence, non plus fixe dans l'espace mais choisi à tout instant comme étant le repère orbital local instantané, l'orientation du trièdre satellite par rapport à ce trièdre de référence étant ici aussi définie par les angles de roulis $\Phi$ de tangage $\Theta$ et de lacet $\Psi$.

Les figures 2A et 2B montrent dans l'espace inertiel Xi, Yi, Zi (où Xi est dirigé vers le point vernal γ, et ou Zi est perpendiculaire au plan équatorial), la géométrie d'une orbite terrestre T définie, par rapport à un plan équatorial EQ, par un noeud ascendant A et une inclinaison i. Ces figures font également apparaître la variation d'anomalie vraie Δv du satellite entre un instant to et un instant ultérieur t de la phase de calibration.

Sur la figure 2A sont représentés, dans le cas d'une phase de calibration sur orbite de transfert avec un capteur de Terre, le trièdre-satellite XYZ à l'instant t et un trièdre de référence Xr Yr Zr fixe ici avantageusement confondu avec le trièdre orbital local à l'instant de démarrage to de la phase d'estimation d'attitude et de calibration des dérives gyromètriques, soit typiquement : Zr vers le centre de la Terre, Yr normal au plan orbital et Xr dans le plan de l'orbite et de même sens que le défilement.

Sur la figure 2B sont représentés, dans le cas d'une phase de calibration sur orbite de transfert avec un capteur de Polaire, le trièdre satellite X Y Z à l'instant t et un trièdre de référence Xr Yr Zr de préférence fixe et défini comme suit à l'instant to : Yr vers le Sud Géographique, Xr et Zr dans le plan équatorial terrestre avec Zr normal au plan défini par le vecteur unitaire S dirigé vers le Soleil et par l'axe Yr.

Sur ces figures la portion d'orbite que parcourt le satellite pendant la phase de calibration est exagérée, pour des raisons de lisibilité.

L'orbite considérée, notamment en cas de détection stellaire, est de préférence, mais pas nécessairement, d'inclinaison nulle ou inférieure à 10° environ.

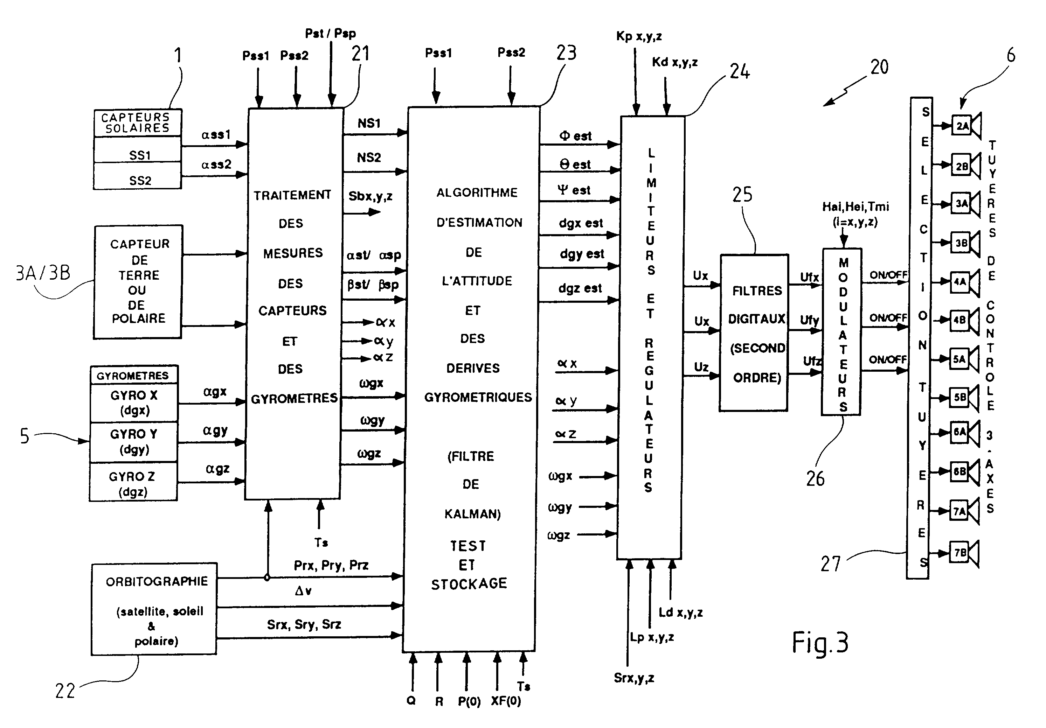

La figure 3 est un schéma fonctionnel général du système de contrôle d'attitude et de correction d'orbite de l'invention, valable pour les satellites des figures 1A et 1B.

Le système de contrôle d'attitude et de correction d'orbite, noté 20 dans son ensemble, comporte un bloc 21 de traitement des mesures des capteurs et des gyromètres, un bloc d'orbitographie 22, un bloc d'estimation 23 contenant un algorithme d'estimation de l'attitude et des dérives gyrométriques et une logique de commande comportant un ensemble 24 de limiteurs et de régulateurs, un ensemble 25 de filtres, un ensemble 26 de modulateurs et un bloc 27 de sélection de tuyères connecté aux tuyères 6.

La logique 21 de traitement des mesures des capteurs 1, 3A (ou 3B) et des gyromètres 5 est formée d'éléments connus en soi ; elle permet de déterminer la position du Soleil dans les axes satellite, une combinaison d'angles d'attitude par le (ou les) capteur(s) solaire(s), les angles de roulis et de tangage mesurés par le capteur de Terre, ou bien les angles de roulis et de lacet mesurés par le capteur polaire ainsi que les vitesses angulaires du satellite mesurées par les gyromètres. Comme on le verra cette logique est composée d'étages de traitement parfois incorporés aux capteurs (du moins à leurs boîtiers) ; c'est par souci de clarté que cette logique 21 est dissociée de ces capteurs.

- Mesures capteurs solaires :

Chaque capteur 1-axe SS1 ou SS2 (c'est-à-dire 1A ou 1B aux figures 1A et 1B) délivre une mesure d'angle αss1 ou αss2 défini par l'inclinaison du Soleil avec l'axe de mesure Yss1 ou Yss2. La logique 21 comporte un étage (parfois incorporé au(x) capteur(s) qui délivre des mesures NS1 et/ou NS2 représentatives de αss1 et/ou αss2.

A partir de ces mesures et à l'aide de relations trigonométriques simples à la portée de l'homme de métier, la logique 21 calcule les composantes Sbx, Sby et Sbz du vecteur unitaire dirigé vers le Soleil en axes satellite X Y Z.

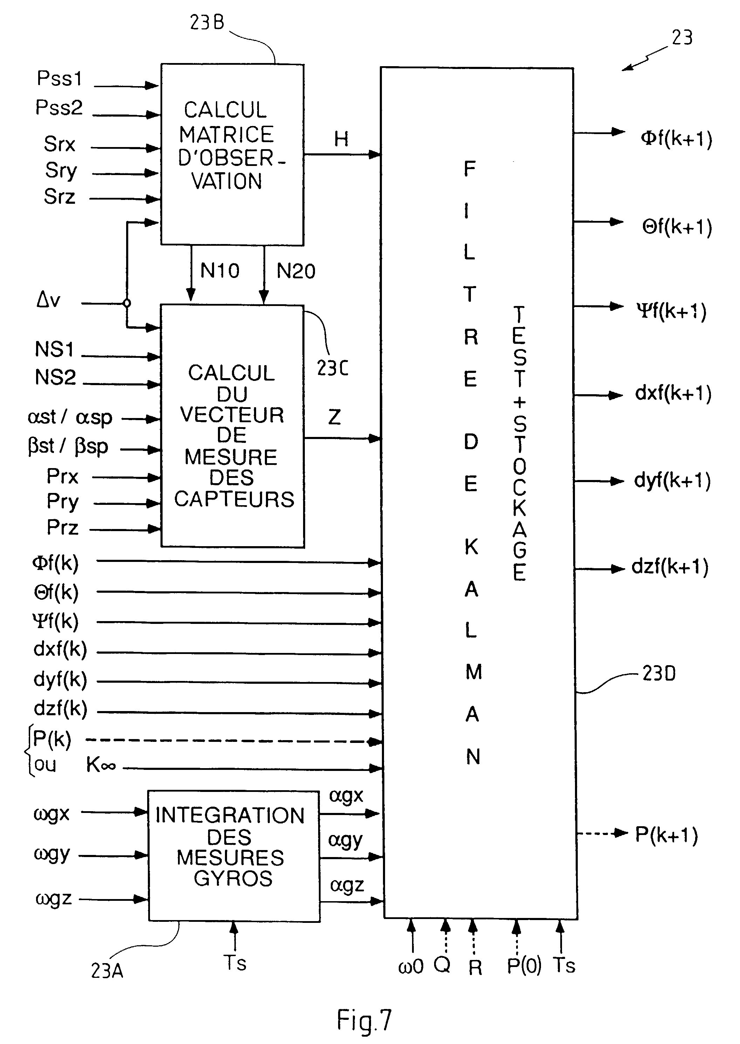

On utilisera plus loin le fait que, comme on le sait, à propos du bloc d'estimation (voir figure 7) les mesures NS1 et NS2 peuvent être linéarisées par rapport aux angles d'attitude (Φ, Θ, Ψ) de la manière suivante :

$$NS1 = N10 + N1x * \Phi + N1y * \Theta + N1z * \Psi$$

$$NS2 = N20 + N2x * \Phi + N2y * \Theta + N2z * \Psi$$

où Ni0 est la mesure du senseur SSi (i=1,2) à attitude nulle (c'est-à-dire dans l'attitude de référence) et (Nix, Niy, Niz) sont les dérivées partielles de NSi par rapport aux angles d'attitude ; on sait calculer les coefficients Nij (i=1,2 et j=0,x,y,z), typiquement en fonction des paramètres suivants :

- les matrices de passage Pss1 et Pss2 définissant l'orientation des trièdres capteurs (Xss1, Yss1, Zss1) et (Xss2, Yss2, Zss2) par rapport au trièdre satellite X Y Z, et
- les composantes Srx, Sry, Srz de la direction du Soleil dans le trièdre de référence Xr Yr Zr.

- Mesures du capteur de Terre :

Le capteur de Terre délivre en sortie deux signaux qu'un étage de la logique 21, connu en soi et parfois incorporé au capteur transforme en deux angles αst et βst (voir figure 1A) définissant la direction du centre Terre dans les axes Xst Yst et Zst du capteur.

Dans l'hypothèse courante considérée ici à titre d'exemple, où les axes de référence de ce capteur sont parallèles aux axes satellite (auquel cas Pst=matrice unité I3x3) et en supposant que les angles d'attitude ($\Phi$, $\Theta$, $\Psi$) restent suffisamment petits, on démontre aisément que les mesures du capteur 3A peuvent être liées aux erreurs d'attitude par les relations suivantes (au 1er ordre en $\Phi$, $\Theta$, $\Psi$, et en tenant compte de la variation d'anomalie vraie $\Delta v$ si nécessaire) :

* *en orbite de transfert* :

$$\alpha st = \Phi + \Psi * tg\,(\Delta v)$$

$$\beta st = \Theta + \Delta v$$

* *en orbite nominale* :

$$\alpha st = \Phi$$

$$\beta st = \Theta$$

- Mesures du capteur de Polaire :

Le capteur de Polaire délivre en visibilité de l'Etoile Polaire, deux signaux qu'un étage de la logique 21, connu en soi et parfois incorporé au capteur, convertit en deux angles d'attitude $\alpha sp$ et $\beta sp$ (voir figure 1B) que l'on sait calculer par des relations trigonomètriques classiques en fonction des coordonnées xsp et ysp de l'étoile dans le repère Xsp Ysp Zsp lié au capteur.

Par ailleurs, dans l'hypothèse où les angles d'attitude du satellite ($\Phi$, $\Theta$, $\Psi$) restent suffisamment petits, on démontre que les mesures du capteur 3B traitées par l'étage précité peuvent être liées aux erreurs d'attitude par les relations suivantes (au 1er ordre en $\Phi$, $\Theta$, $\Psi$) :

$$\alpha sp = \Phi - arctg\,(Prz/Pry)$$

$$\beta sp = \Psi + arctg\,(Prx/Pry)$$

où Prx, Pry, Prz sont les composantes en axes de références Xr,Yr,Zr du vecteur unitaire dirigé vers la Polaire.

- Mesures des gyromètres :

Les gyromètres permettent de mesurer soit les vitesses angulaires ($\omega gx$, $\omega gy$, $\omega gz$) du satellite sur les trois axes s'ils sont du type gyromètre simple, soit les incréments de rotation ($\alpha gx$, $\alpha gy$, $\alpha gz$) s'ils sont du type gyromètre intégrateur. Dans ce dernier cas (considéré à la figure 3), on calcule (dans un étage de tout type connu approprié faisant partie de la logique 21) les vitesses gyromètriques ($\omega gx$, $\omega gy$, $\omega gz$) par différentiation des mesures angulaires ($\alpha gx$, $\alpha gy$, $\alpha gz$) en fonction de la période de mesure Tg des gyromètres. Par contre, aucun traitement n'est ici nécessaire si les gyromètres sont simples.

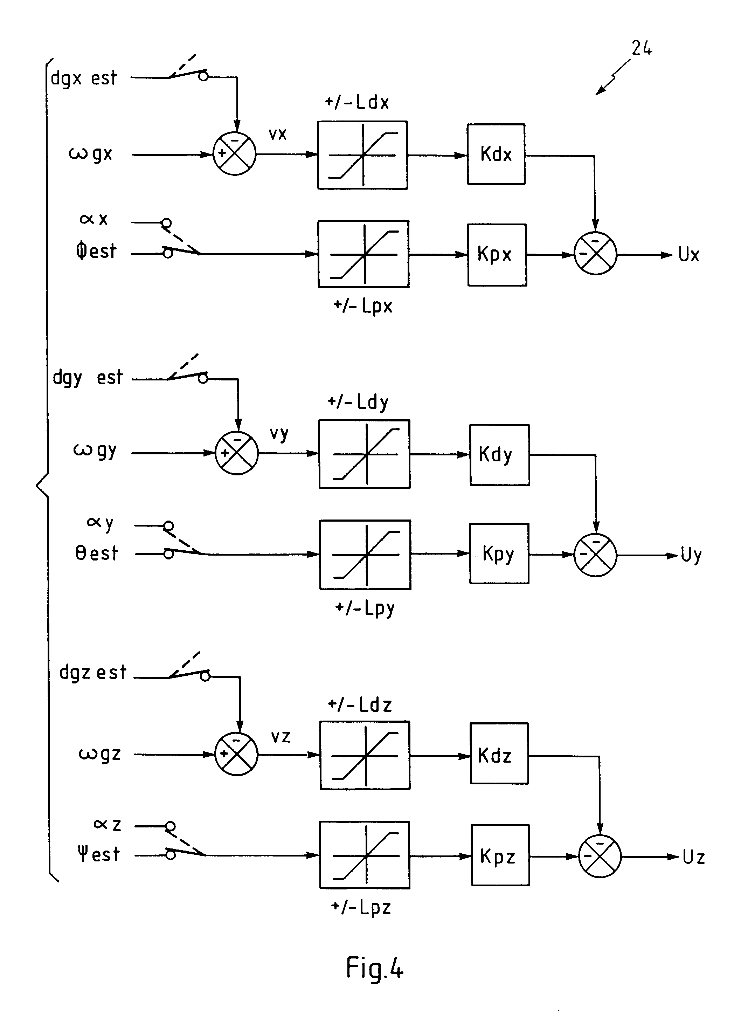

En outre, de manière classique, cette logique élabore, selon des équations de tout type connu approprié, des grandeurs d'attitude $\alpha x$, $\alpha y$ et $\alpha z$ destinées, en mode de contrôle d'attitude sans calibration (qui ne fait pas en soi partie de l'invention), à être appliquées directement à la logique de commande (voir plus loin à propos de la figure 4). Ces grandeurs sont en pratique calculées à partir des mesures $\alpha st$ ou $\alpha sp$, $\beta sp$ ou $\beta st$ du détecteur terrestre ou stellaire, des coordonnées (mesurées) Sbx, Sby et Sbz du vecteur solaire et des coordonnées Srx, Sry et Srz du vecteur Sr. A titre d'exemple, ces grandeurs peuvent être calculées comme suit :

* *cas d'un capteur de Terre* :

$$\alpha x = \alpha st$$

$$\alpha y = Srx * Sbz - Srz * Sbx$$

$$\alpha z = Sry * Sbx - Srx * Sby$$

* *cas d'un capteur de Polaire* :

$$\alpha x = \alpha sp - Arc\ tg\ (Prz/Pry)$$

$$\alpha y = Srx * Sbz - Srz * Sbx$$

$$\alpha z = Sry * Sbx - Srx * Sby$$

Le bloc logique (ou fonction) d'orbitographie 22 a pour rôle de déterminer à chaque instant, de toute manière appropriée :

- dans le cas du satellite équipé du capteur de Polaire 3B, la position du satellite sur son orbite et les composantes de la direction Polaire dans le trièdre de référence. Ces derniers paramètres peuvent être calculés, par exemple, en fonction de la position orbitale du satellite et des composantes du vecteur direction polaire dans l'espace inertiel,
- dans le cas du satellite muni du capteur de Terre 3A, la position du satellite sur son orbite et, éventuellement, la variation de l'anomalie vraie $\Delta v$ sur l'orbite du satellite par rapport au point de démarrage de la phase d'estimation d'attitude et de calibration des dérives gyromètriques. Pour ce faire, plusieurs solutions connues sont envisageables. A titre indicatif, on peut citer :

  * soit un modèle de propagation de l'orbite basé sur l'équation de KEPLER, avec des conditions initiales correspondant au point de démarrage de la manoeuvre,
  * soit un tableau de valeurs définissant à des intervalles de temps réguliers, soit les composantes Prx, Pry et Prz de la direction polaire dans le repère de référence, soit la variation d'anomalie vraie $\Delta v$ en fonction du temps écoulé depuis le début de la manoeuvre,
  * soit un développement limité basé sur l'équation de KEPLER et les relations entre l'anomalie vraie et l'anomalie excentrique (voir à ce propos l'ouvrage intitulé "Spacecraft Attitude Determination and Control" de WERTZ James, Editor, Reidel Publishing Company, HOLLAND/USA/ENGLAND, 1986). Rappelons que l'angle $\Delta v$ définit la rotation de l'axe Z du satellite autour de la normale orbitale Yr, comme le montre la figure 2A,
  * soit des télécommandes envoyées du sol.

En outre, la fonction d'orbitographie délivre les composantes Srx, Sry et Srz de la direction du Soleil S dans le repère de référence Xr Yr Zr et ce en fonction de la date de la manoeuvre et des paramètres de l'orbite. Dans le cas d'une orbite équatoriale, ces composantes sont des fonctions sinusoïdales du temps.

L'objectif de la logique de commande d'attitude est de maintenir le trièdre satellite X Y Z parallèle au trièdre de référence Xr Yr Zr.

Pour ce faire, la logique de commande d'attitude est composée essentiellement (voir ci-dessus) d'un ensemble 24 formé de régulateurs linéaires classiques, du type proportionnelle-dérivée ou proportionnel-intégral-dérivé (PID) associés à un ensemble de limiteurs, de filtres 25 et de modulateurs non-linéaires 26, et d'une logique 27 de sélection des tuyères pour la génération de couples suivant les trois axes.

Les régulateurs 24 (voir la figure 4) déterminent des couples de commande linéaire Ux, Uy, Uz en se basant sur des gains en position (Kpx, Kpy, Kpz) et en vitesse (Kdx, Kdy, Kdz) ainsi que, selon un aspect important de l'invention, sur les paramètres d'entrée suivants :

- les angles d'attitude $\Phi$est , $\Theta$est et $\Psi$est ainsi que les dérives gyromètriques (dgx)est , (dgy)est et (dgz)est, estimés par le filtre de KALMAN 23 (voir ci-après),
- les vitesses angulaires $\omega$gx, $\omega$gy et $\omega$gz mesurées par les gyromètres 3 axes.

Des moyens de commutation, schématisés à la figure 4 par des interrupteurs ou commutateurs, permettent de commuter entre le mode précité de contrôle d'attitude en cours de calibration utilisant des valeurs estimées (les interrupteurs/commutateurs sont alors en traits pleins) et un mode classique de contrôle d'attitude hors calibration de tout type connu approprié, utilisant les grandeurs αx, αy, αz fournies par le bloc 21 (les interrupteurs/commutateurs sont alors dans leurs configurations en tiretés).

Ces régulateurs linéaires sont par exemple ici de type proportionnel-dérivée.

En outre et dans le but d'éviter la saturation des commandes, on associe de façon connue à ces régulateurs un ensemble de limiteurs ou de logiques simples linéaires autour de zéro et ayant des niveaux de saturation, en position (Ldx, Lpy, Lpz) et en vitesse (Ldx, Ldy, Ldz) présélectionnés.

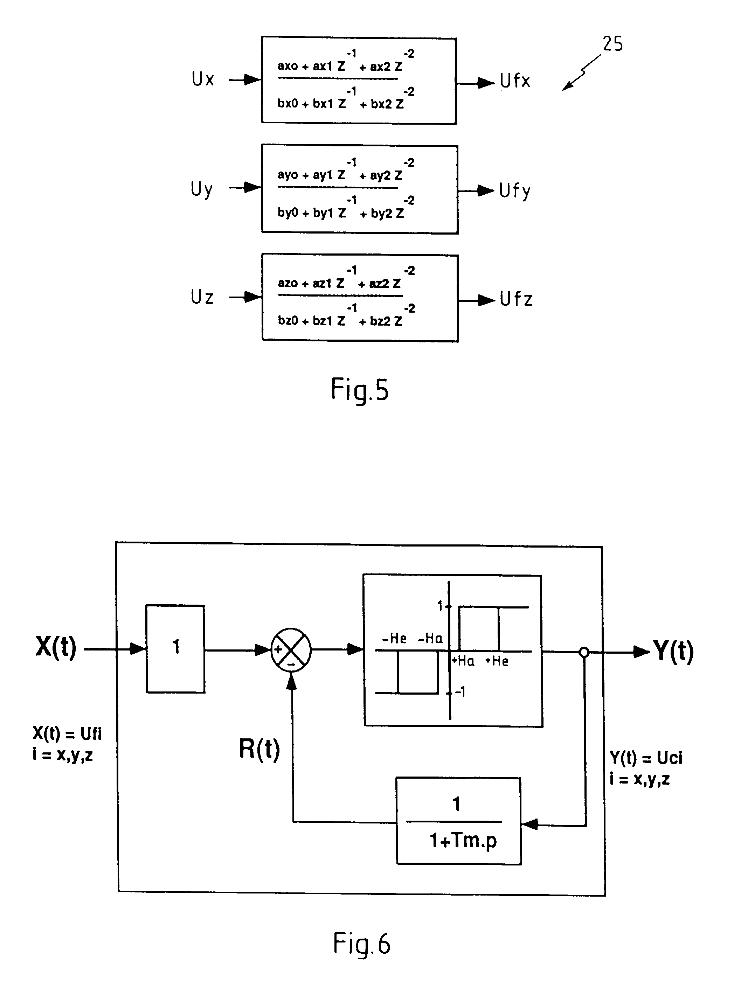

Les filtres 25 (voir la figure 5) connus en soi, de préférence ici digitaux et de type classique (ici du second ordre), ont pour rôle de réduire les effets parasites dûs, entre autres, aux bruits des capteurs et de filtrer les perturbations induites par les éléments flexibles des ailes du générateur solaire et des antennes (non représentés aux figures 1A et 1B pour des raisons de lisibilité). Les filtres peuvent en variante être analogiques.

En écriture discrète, les grandeurs d'entrée Ui et les grandeurs de sortie Ufi de ce filtre, avec i = x, y ou z , sont classiquement liées, en tenant compte des instants n, n-1 et n-2 par la relation :

$$Ufi(n) = [-bi_1 * Ufi(n-1) - bi_2 * Ufi(n-2) + ai0 * Ui(n)$$

$$+ au1 * Ui(n-1) + ai2 * Ui(n-2)]/bi0$$

où les paramètres $bi_1$, $bi_2$, ai0 ... bi0 sont des paramètres de filtrage prédéterminés.

Les modulateurs 26 (voir la figure 6), de tout type connu approprié, sont ici, à titre d'exemple, des organes non-linéaires définis généralement par une structure de système asservi comprenant typiquement une logique non linéaire à saturation et hystérésis (avec des paramètres classiquement appelés He et Ha) et un filtre linéaire du premier ordre (avec une constante de temps Tm). Ces modulateurs transforment des niveaux d'entrée continus en séries d'impulsions équivalentes pour les tuyères de contrôle 3-axes, de niveau égal à 0, +1 ou -1, multiplié si nécessaire par un facteur d'échelle. Le modulateur représenté est ici classique, du type PRM (Pseudo-Rate Modulator) avec un facteur d'échelle en sortie égal à 1.

Enfin, le bloc 27 de sélection des tuyères est une structure logique de tout type connu approprié, câblée ou non, qui permet d'activer les tuyères, notées par exemple 2A, 3A, 4A, 5A, ,6A, 7A pour la branche A et 2B, 3B, 4B, 5B, , 6B, 7B pour la branche B, de manière à réaliser les couples de commande d'attitude commandés suivant l'un ou l'autre des 3 axes du satellite.

L'architecture générale de la <u>logique d'estimation 23</u> de l'attitude et des dérives gyromètriques ressort du diagramme fonctionnel de la figure 7.

Selon ce diagramme, on estime l'attitude inertielle du satellite et les dérives constantes de ses gyromètres à l'aide d'un filtre de KALMAN faisant classiquement intervenir, notamment, une matrice d'observation notée H, un vecteur de mesure ici noté Z et des matrices d'état ici notées F et G, et basé sur le modèle cinématique de l'attitude 3-axes (des changements de notation apparaîtront parfois par rapport à ce qui précède, pour tenir compte de ce que la formulation du filtrage est en pratique discrète). Pour ce faire, on dispose des blocs de traitement et de calcul suivants :

- <u>Bloc 23A d'intégration des mesures gyromètres</u> (non utilisé si l'on dispose de gyromètres intégrateurs) :

    → Entrées :

        . mesures gyromètriques 3-axes : ωgx, ωgy et ωgz
        . période d'échantillonnage : Ts

    → Sorties :

        . incrément de rotation sur les trois axes pendant la période d'échantillonnage : αgx, αgy et αgz

- <u>Bloc 23B de calcul de la matrice d'observation H</u> (ainsi que cela ressortira plus loin, il s'agit d'une matrice de dimension 4x6 ou 3x6 selon qu'il y a deux ou une seule mesure(s) solaire(s) 1-axe ) :

    → Entrées :

        . matrice(s) de passage du (des) repère(s) capteur(s) solaire(s) au repère satellite : Pss1 et/ou Pss2
        . composantes du vecteur Soleil de référence : Srx, Sry, Srz
        . variation de l'anomalie vraie (dans le cas d'un capteur de Terre, pour une calibration sur orbite de transfert par exemple) : Δv

→ Sorties :

   . matrice de mesure : H
   . coefficients solaires : N10 et/ou N20 définis ci-dessus à propos des mesures solaires NS1 et/ou NS2.

- Bloc 23C de calcul du vecteur de mesure Z des capteurs solaires et de Terre ou de Polaire (vecteur de dimension 4x1 avec deux mesures solaires, ou 3x1 dans le cas d'une seule mesure solaire 1-axe ) :

→ Entrées :

   . mesures des capteurs solaires : NS1 et/ou NS2
   . mesures du capteur de Terre : αst et βst
   . ou bien mesures du capteur de Polaire : αsp et βsp
   . variation de l'anomalie vraie (si nécessaire en cas de capteur de Terre) : Δv
   . les coefficients solaires : N10 et/ou N20
   . composantes du vecteur solaire dans le repère de référence (si nécessaire en cas de capteur polaire) : Prx, Pry, Prz

→ Sorties :

   . vecteur de mesure des capteurs : Z

- Bloc 23D représentatif de calcul du filtre de KALMAN :

→ Entrées :

   . matrice d'observation : H
   . vecteur de mesure des capteurs : Z
   . incrément de rotation sur les 3-axes : $\alpha gx$, $\alpha gy$ et $\alpha gz$
   . vecteur d'état du filtre à l'instant précédent ( t=k*Ts) formé des six grandeurs suivantes :

      $\Phi f(k)$, $\Theta f(k)$, $\Psi f(k) \rightarrow$ Angles d'attitude estimés (formulation discrète), appelés $\Phi est$, $\Theta est$, et $\Psi est$ (formulation générale) aux figures 3 et 4,
      $dxf(k)$, $dyf(k)$, $dzf(k) \rightarrow$ Dérives gyromètriques estimées (formulation discrète), appelées (dgz)est, (dgy)est et (dgz)est (formulation générale) aux figures 3 et 4,

   . valeur XF(0) de ce vecteur à l'instant t=0,
   . dans le cas de gains de KALMAN calculés en ligne (flèche pointillée à la figure 7) : matrice de covariance de l'erreur d'estimation à l'instant précédent : P(k)

→ Paramètres constants :

   - période d'échantillonage : Ts
   - pulsation orbitale : ωo
   - matrices d'état du filtre explicitées plus loin : F (dim 6x6) , G (dim 6x3), D (dim 6x1)

      . dans le cas de gains de KALMAN constants:
      matrice de gains : K∞ (dim 6x4, ou 6x3 pour une seule mesure solaire 1 axe)
      . dans le cas de gains de KALMAN calculés en ligne (flèches pointillées à la figure 7) :

         * matrice de covariance des bruits d'état (sur $\Phi f$, $\Theta f$, $\Psi f$, et dxf, dyf, dzf) de dimension 6x6 : Q
         * matrice de covariance des erreurs de mesure des capteurs solaires, de Terre ou de Polaire de dimensions 4x4 (ou 3x3) : R
         * matrice de covariance de l'erreur d'estimation à t=0 P(0)

→ Sorties :

- vecteur d'état du filtre à l'instant suivant (t=(k+1)*Ts) : $\Phi f(k+1)$, $\Theta f(k+1)$, $\Psi f(k+1) \rightarrow$ Angles d'attitude estimés, dxf(k+1), dyf(k+1), dzf(k+1) $\rightarrow$ Dérives gyromètriques estimées
- dans le cas de gains de KALMAN calculés en ligne: matrice de covariance de l'erreur d'estimation t=(k+1) Ts : P(k+1)

La formulation typique de l'algorithme d'estimation est basée sur le filtre de KALMAN discret et se fait de la manière suivante (Cf. chapitres 13 et 14 de l'ouvrage de WERTZ ou bien chapitre IX de l'ouvrage de LABARRERE, KRIEF, GIMONET, "Le filtrage et ses applications", CEPADUES Editions, ENSAE/SUP'AERO, 1978).

Le filtre de KALMAN est établi à partir d'un modèle d'état de l'attitude défini, en formulation discrète, comme suit :

$$X(k+1) = F * X(k) + G * A(k) + D + W(k)$$

$$Z(k) = H(k) * X(k) + V(k)$$

avec :

- $k$ = indice d'échantillonnage, et le temps valant t=k*Ts
- $X(k) = [\Phi f(k), \Theta f(k), \Psi f(k), dxf(k), dyf(k), dzf(k)]^t$ qui est le vecteur d'état du filtre : estimés des 3 angles d'attitude et des dérives gyromètriques sur les 3 axes
- $A(k) = [\alpha gx(k), \alpha gy(k), \alpha gz(k)]^t$ qui est le vecteur des incréments de rotation angulaires déterminées à partir des mesures gyromètriques.
- $W(k)$ vecteur de bruits d'état discret correspondant à l'erreur de modélisation des bruits gyromètriques, par des bruits blancs, gaussiens et à moyennes nulle
- $V(k)$ vecteur de bruits sur les mesures.

Le vecteur de mesure $Z(k)$ s'écrit à partir des équations mentionnées ci-dessus à propos des capteurs solaire(s) et de Terre ou de Polaire :

* cas d'un capteur de Terre :

  - en orbite de transfert

    . $Z(k) = [\alpha st(k), \beta st(k)-\Delta v(k), NS1(k)-N10, NS2(k)-N20]^t$ dans le cas de deux capteurs solaires ou $Z(k) = [\alpha st(k), \beta st(k)-\Delta v(k), NS2(k)-N20]^t$ dans le cas d'un seul capteur solaire ici SS2 ;

  - en orbite nominale : mêmes équations sans le terme d'anomalie.

* cas d'un capteur de Polaire :

  . $Z(k) = [\alpha sp(k)+Prz/Pry, \beta sp(k)-Prx/Pry, NS1(k)-N10, NS2(k)-N20]^t$ dans le cas de deux capteurs solaires ou $Z(k) = [\alpha sp(k)+Prz/Pry, \beta sp(k)-Prx/Pry, NS1(k)-N10]^t$ dans le cas d'un seul capteur solaire SS1.

En plus, on sait définir les matrices d'état à partir de la signification même de l'équation de prédiction et des vecteurs $X(k)$ et $A(k)$ :

$$D = [\,0\ d\ 0\ 0\ 0\ 0\,]^t$$

$$F = \begin{vmatrix} 1 & 0 & 0 & -Ts & 0 & 0 \\ 0 & 1 & 0 & 0 & -Ts & 0 \\ 0 & 0 & 1 & 0 & 0 & -Ts \\ 0 & 0 & 0 & 1 & 0 & 0 \\ 0 & 0 & 0 & 0 & 1 & 0 \\ 0 & 0 & 0 & 0 & 0 & 1 \end{vmatrix} \qquad G = \begin{vmatrix} 1 & 0 & 0 \\ 0 & 1 & 0 \\ 0 & 0 & 1 \\ 0 & 0 & 0 \\ 0 & 0 & 0 \\ 0 & 0 & 0 \end{vmatrix}$$

avec :

$d = 0$       en orbite de transfert
$d = \omega o * Ts$       en orbite finale, pour tenir compte de la rotation du repère de référence.

Plus généralement, cette matrice D tient compte de toute modification dans l'espace de l'orientation du repère de référence, et ce quels que soient les capteurs utilisés (aussi bien capteurs de Terre que de Polaire).

On peut également définir la matrice d'observation à partir des diverses équations précitées à propos des capteurs :

\*     avec un capteur de Terre :

   -     et deux capteurs solaires :

$$H(k) = \begin{vmatrix} 1 & 0 & H13 & 0 & 0 & 0 \\ 0 & 1 & 0 & 0 & 0 & 0 \\ N1x & N1y & N1z & 0 & 0 & 0 \\ N2x & N2y & N2z & 0 & 0 & 0 \end{vmatrix}$$

   -     et un seul capteur solaire (ici SS2) :

$$H(k) = \begin{vmatrix} 1 & 0 & H13 & 0 & 0 & 0 \\ 0 & 1 & 0 & 0 & 0 & 0 \\ N2x & N2y & N2z & 0 & 0 & 0 \end{vmatrix}$$

avec :

$H13 = tg\ [\Delta v(k)]$       en orbite de transfert
$H13 = 0$       en orbite finale

\*     avec un capteur de Polaire :

   -     et deux capteurs solaires :

$$H(k) = \begin{vmatrix} 1 & 0 & 0 & 0 & 0 & 0 \\ 0 & 0 & 1 & 0 & 0 & 0 \\ N1x & N1y & N1z & 0 & 0 & 0 \\ N2x & N2y & N2z & 0 & 0 & 0 \end{vmatrix}$$

- avec un seul capteur solaire (ici SS1) :

$$H(k) = \begin{vmatrix} 1 & 0 & 0 & 0 & 0 & 0 \\ 0 & 0 & 1 & 0 & 0 & 0 \\ N1x & N1y & N1z & 0 & 0 & 0 \end{vmatrix}$$

L'algorithme du filtre de KALMAN (équations dynamiques d'estimation) permet alors de réaliser une estimation récursive optimale de l'état X(k+1) à l'instant t = [(k+1) * Ts] à partir de l'état précédent X(k), (et de propager la matrice P(k) de covariance de l'erreur d'estimation dans le cas de gains de kalman calculés en ligne) et donc de calculer en temps réel les estimés des angles d'attitude et des dérives gyrométriques.

Plus précisément, les équations du filtre correspondent à 2 étapes successives :

a) Etape 1 - Prédiction :

$$Xp(k+1) = F * X(k) + G * A(k) + D \qquad (1)$$

et, dans le cas de gains de KALMAN calculés en ligne :

$$Pp(k+1) = F * P(k) * F^t + Q \qquad (2)$$

$$K(k+1) = Pp(k+1)*H(k+1)^t$$

$$*[H(k+1)*Pp(k+1)*H(k+1)^t + R]^{-1} \qquad (3)$$

b) Etape 2 - Correction :

$$X(k+1) = Xp(k+1)+K(k+1)*[Z(k+1)-H(k+1)*Xp(k+1)] \qquad (4)$$

dans le cas général, ou bien :

$$P(k+1) = Pp(k+1) - K(k+1) * H(k+1) * Pp(k+1)^t \qquad (5)$$

dans le cas de gains de KALMAN calculés en ligne, avec :

Q     Matrice de covariance du bruit d'état W(k)
R     Matrice de covariance du bruit de mesure V(k)
P(k)     Matrice de covariance de l'erreur d'estimation à l'instant t(k), (P(0) donné)
K(k)     Matrice des gains d'estimation à l'instant t*Ts (constants ou calculés en ligne)
Xp(k)     Vecteur d'état en prédiction (X(0) donné)
Pp(k)     Matrice de covariance des erreurs de prédiction

Comme le montre les équations de prédiction et de correction, la dynamique d'estimation et ses performances dépendent fortement de la matrice des gains K(k). Cette dernière est, dans le cas nominal, calculée par résolution d'une équation matricielle de type RICCATTI avec des matrices d'ordre 6x6, résultant de la combinaison des équations (3) et (5) ci-dessus.

Toutefois, si la taille mémoire du calculateur est limitée ou si l'on veut réaliser des économies en temps de calcul (par exemple, pour faire exécuter d'autres tâches plus prioritaires), il est possible, après résolution préalable des équations matricielles (3) et (5), d'utiliser une seule valeur (gains asymptotiques) ou N valeurs (gains variables tabulées) de la matrice K, appelée K∞, que l'on stocke en mémoire ou que l'on envoie par télécommande au satellite depuis le sol.

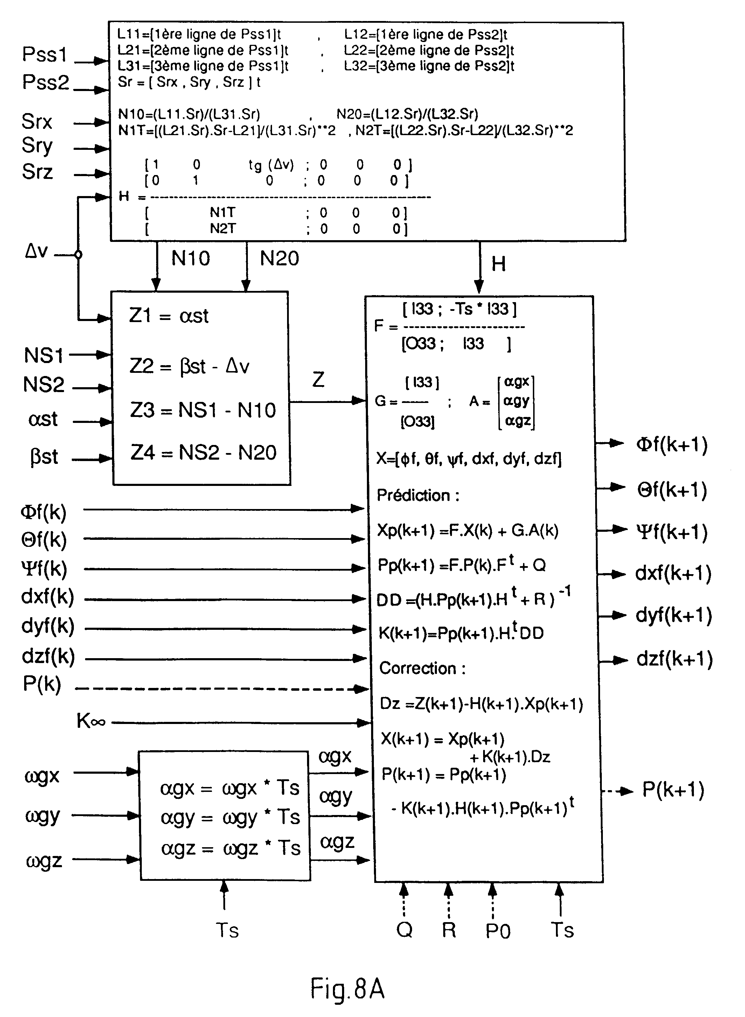

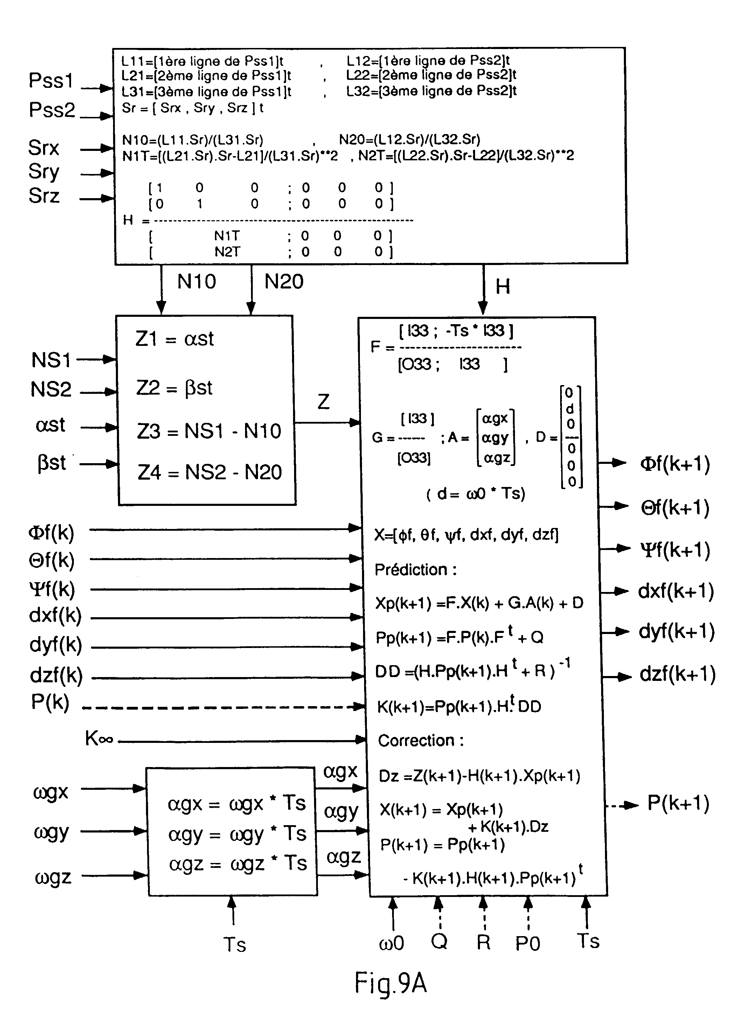

Les figures 8A à 8D et 9A à 9D précisent la figure 7, en application de ce qui précède, selon que l'estimation se fait en orbite de transfert ou en orbite opérationnelle, avec un ou deux capteur(s) solaire(s), et avec un capteur de Terre ou de Polaire, étant rappelé que I33 est la matrice identifé 3x3 et que 033 est la matrice 3x3 dont tous les termes sont nuls.

La figure 8A montre, à titre d'exemple, la structure détaillée de l'algorithme d'estimation d'attitude et des dérives gyromètriques sur une orbite de transfert à l'aide de 2 capteurs solaires 1-axe et d'un capteur de Terre 2-axes.

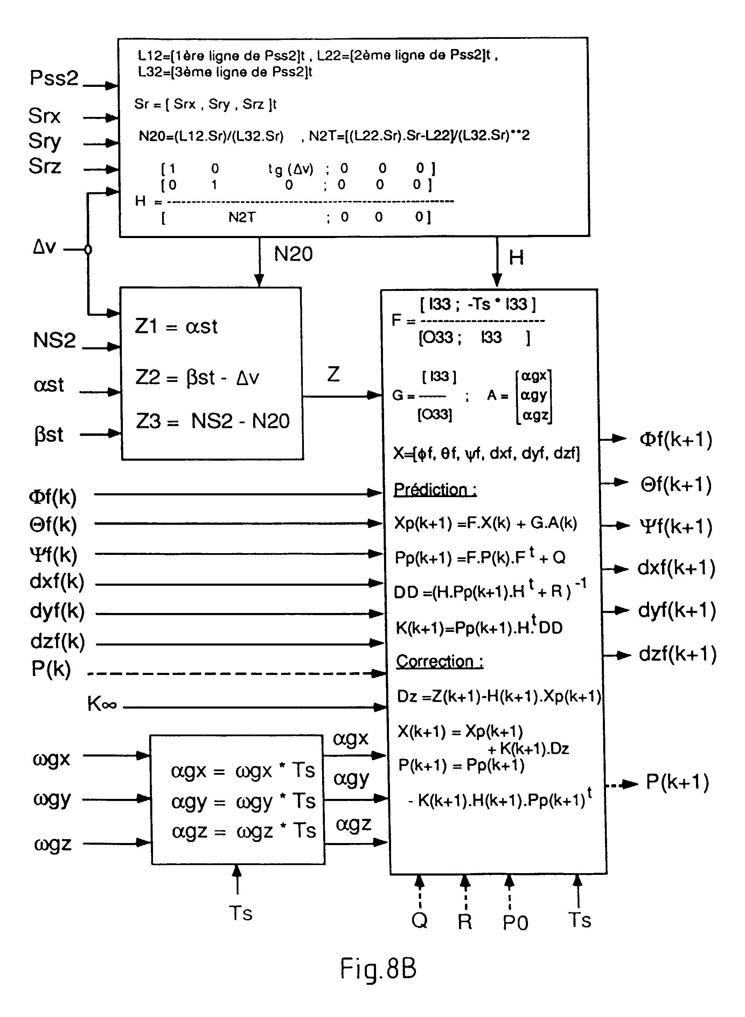

La figure 8B montre, à titre d'exemple, la structure détaillée de l'algorithme d'estimation d'attitude et des dérives gyromètriques sur une orbite de transfert à l'aide d'un seul capteur solaire 1-axe (capteur SS2) et d'un capteur de Terre.

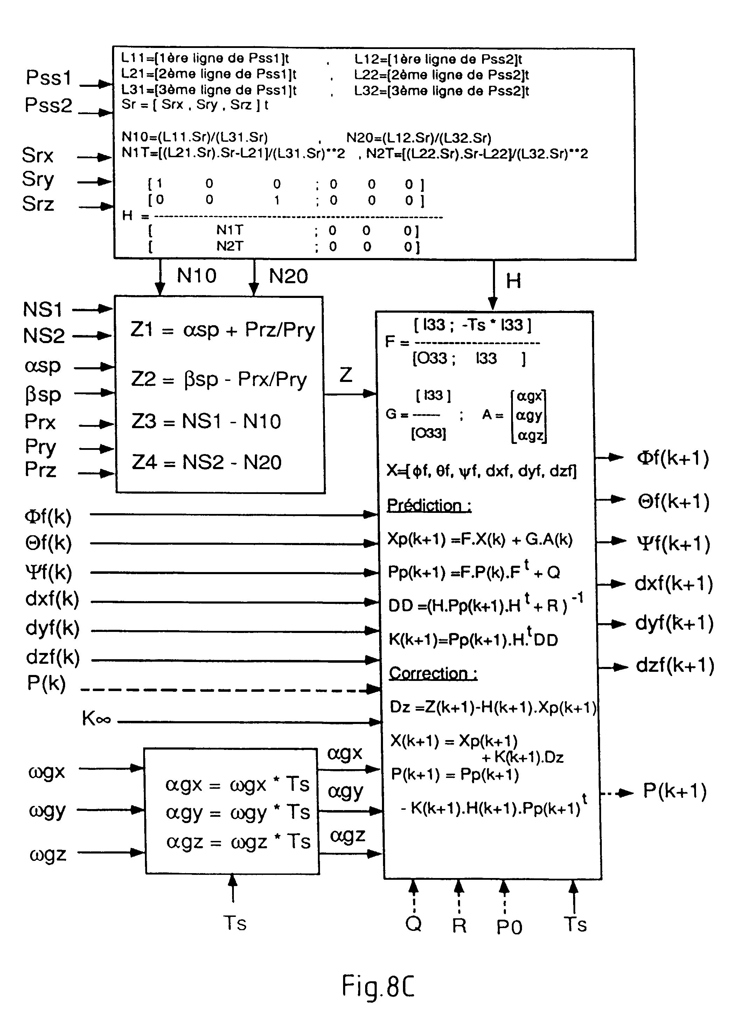

La figure 8C montre, à titre d'exemple, la structure détaillée de l'algorithme d'estimation d'attitude et des dérives gyromètriques sur une orbite de transfert à l'aide de 2 capteurs solaires 1-axe et d'un capteur de Polaire 2-axes.

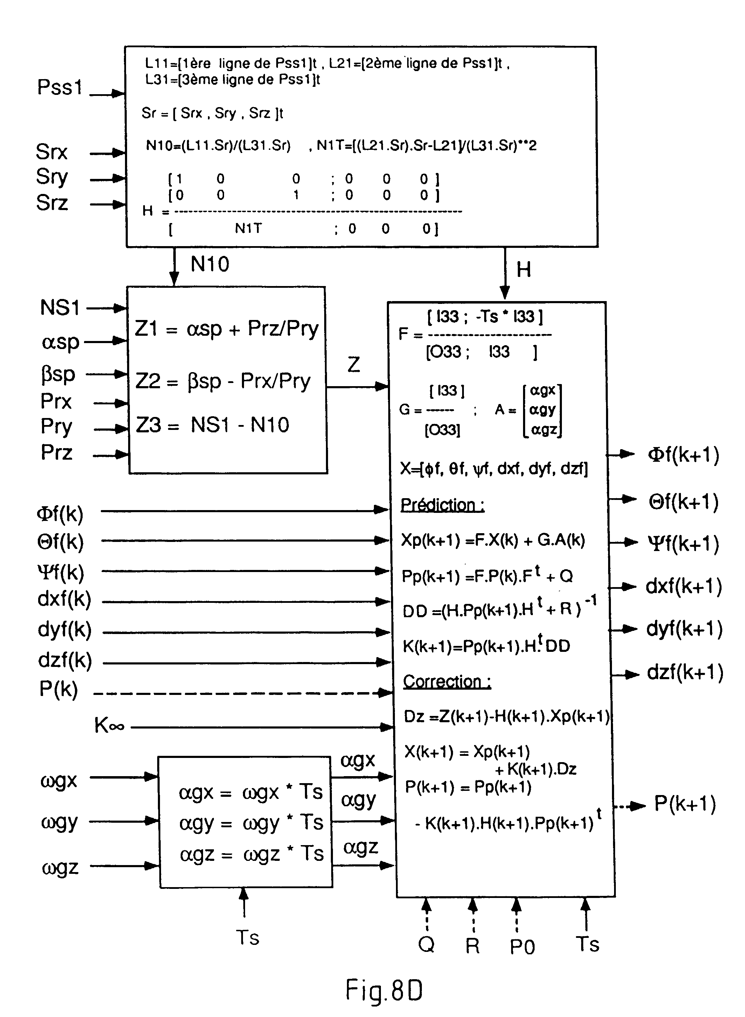

La figure 8D montre, à titre d'exemple, la structure détaillée de l'algorithme d'estimation d'attitude et des dérives gyromètriques sur une orbite de transfert à l'aide d'un seul capteur solaire 1-axe (capteur SS1) et d'un capteur de Polaire.

La figure 9A montre, à titre d'exemple, la structure détaillée de l'algorithme d'estimation d'attitude et des dérives gyromètriques en mode normal sur l'orbite finale à l'aide de 2 capteurs capteurs solaires 1-axe et d un capteur de Terre.

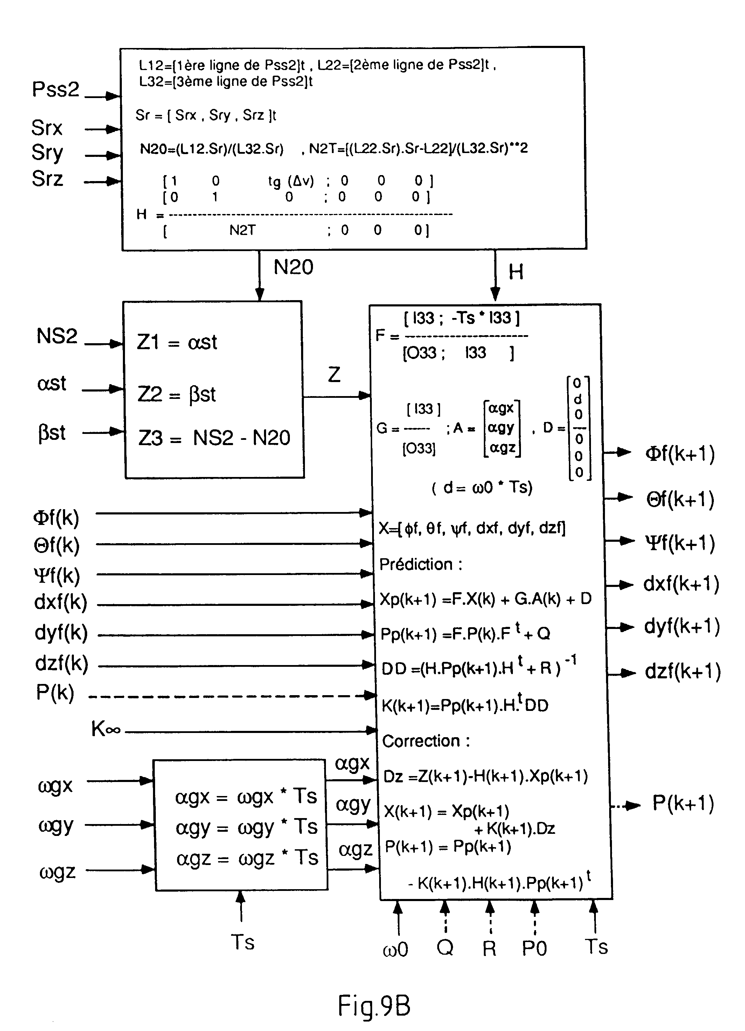

La figure 9B montre, à titre d'exemple, la structure détaillée de l'algorithme d'estimation d'attitude et des dérives gyromètriques en mode normal sur l'orbite finale à l'aide d'un capteur solaire 1-axe (SS2) et d'un capteur de Terre.

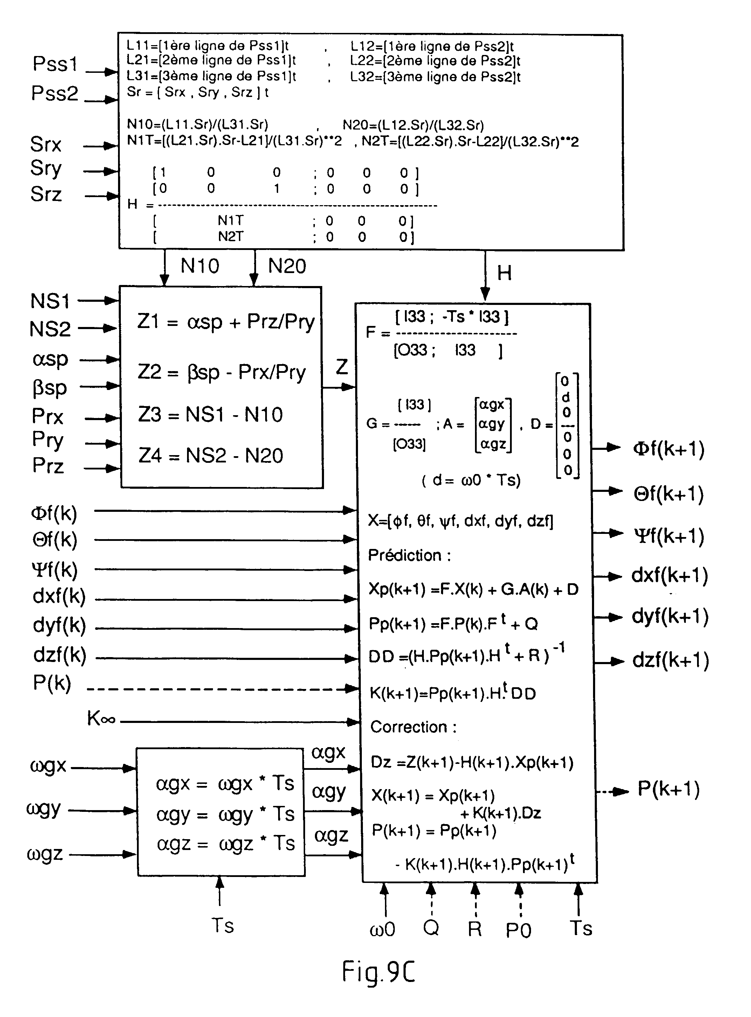

La figure 9C montre, à titre d'exemple, la structure détaillée de l'algorithme d'estimation d'attitude et des dérives gyromètriques en mode normal sur l'orbite finale à l'aide de 2 capteurs capteurs solaires 1-axe et d'un capteur de Polaire.

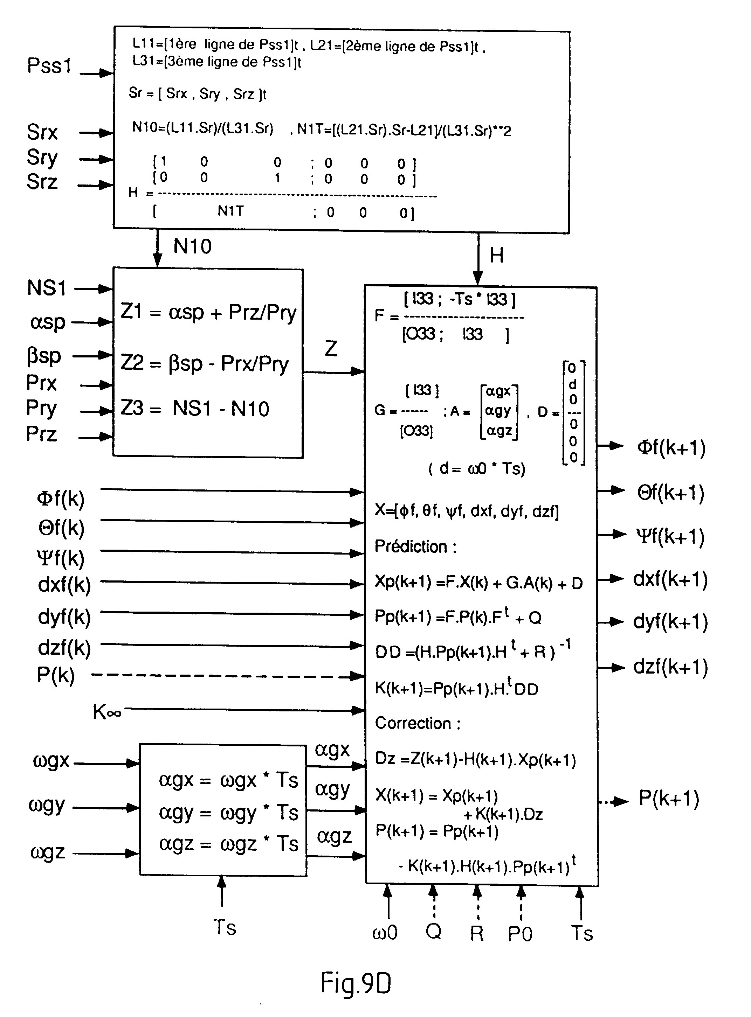

La figure 9D montre, à titre d'exemple, la structure détaillée de l'algorithme d'estimation d'attitude et des dérives gyromètriques en mode normal sur l'orbite finale d'un capteur solaire 1-axe (SS1) et d'un capteur de Polaire.

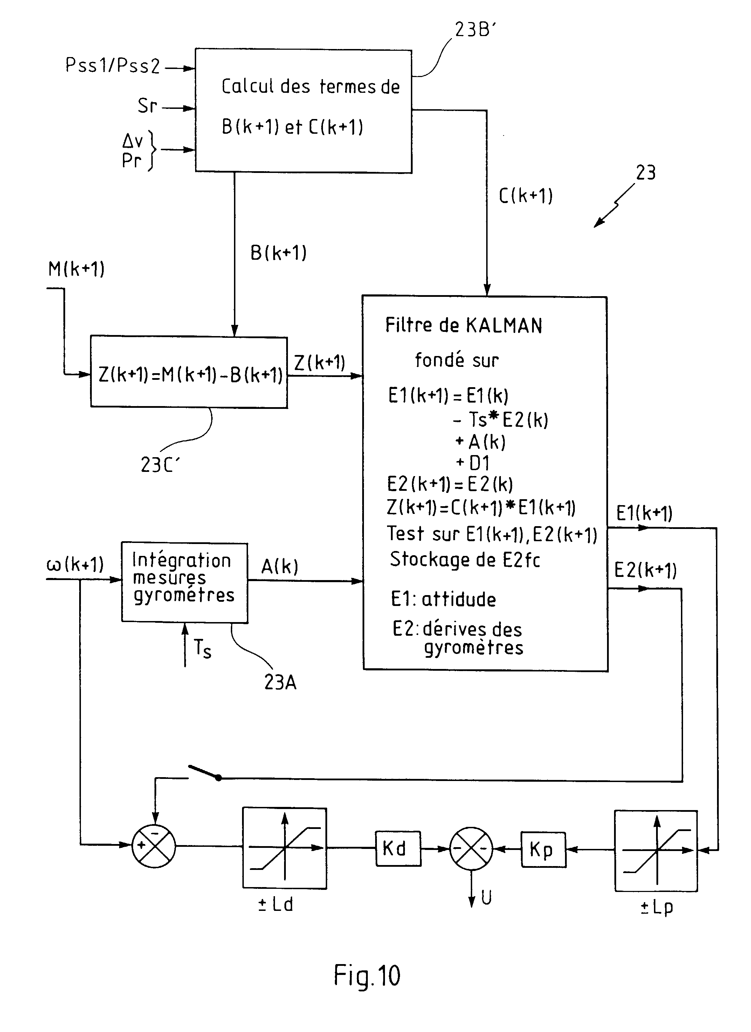

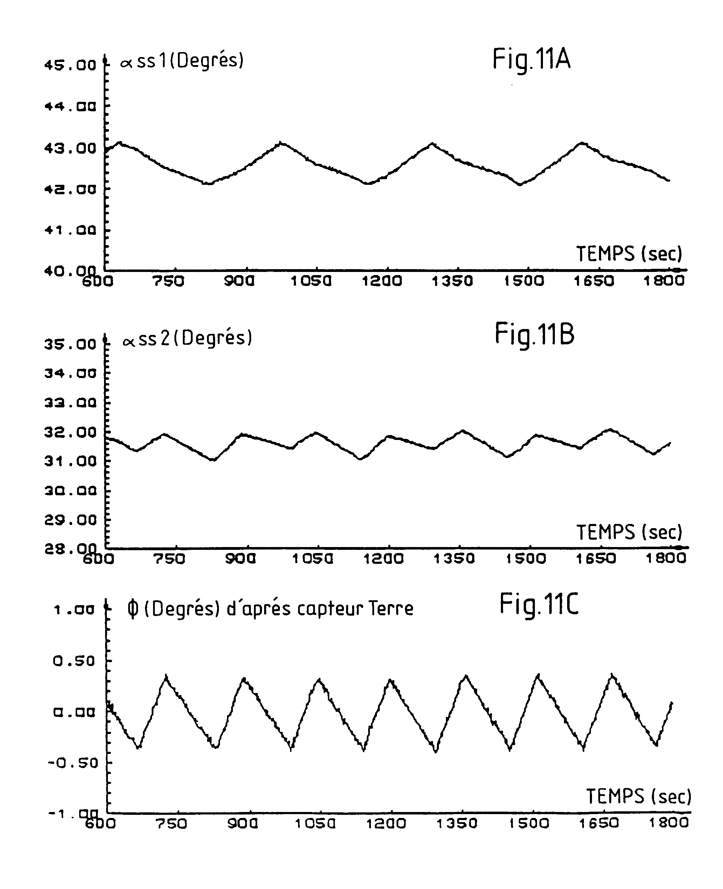

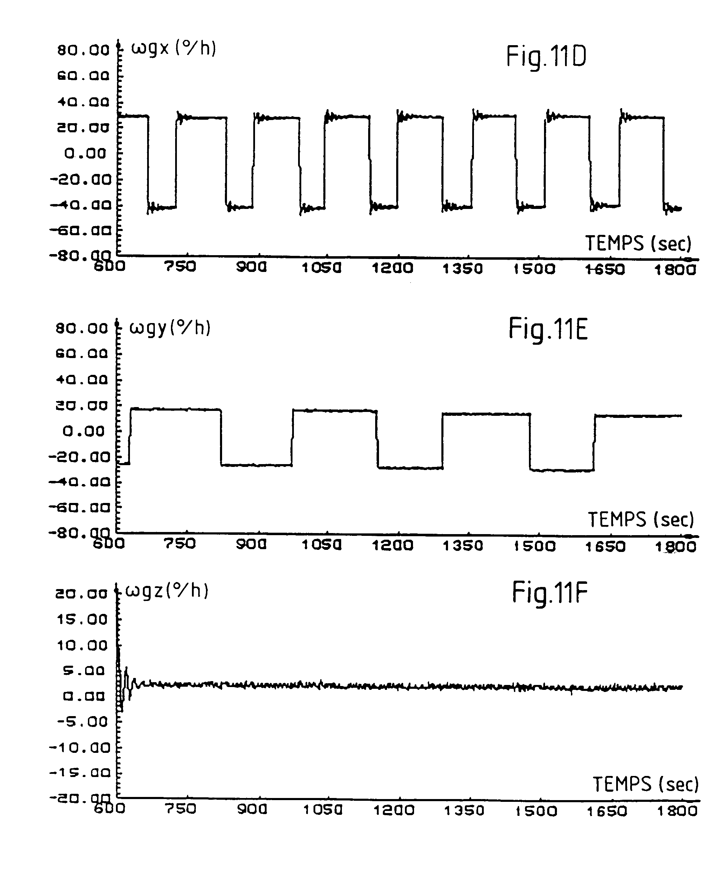

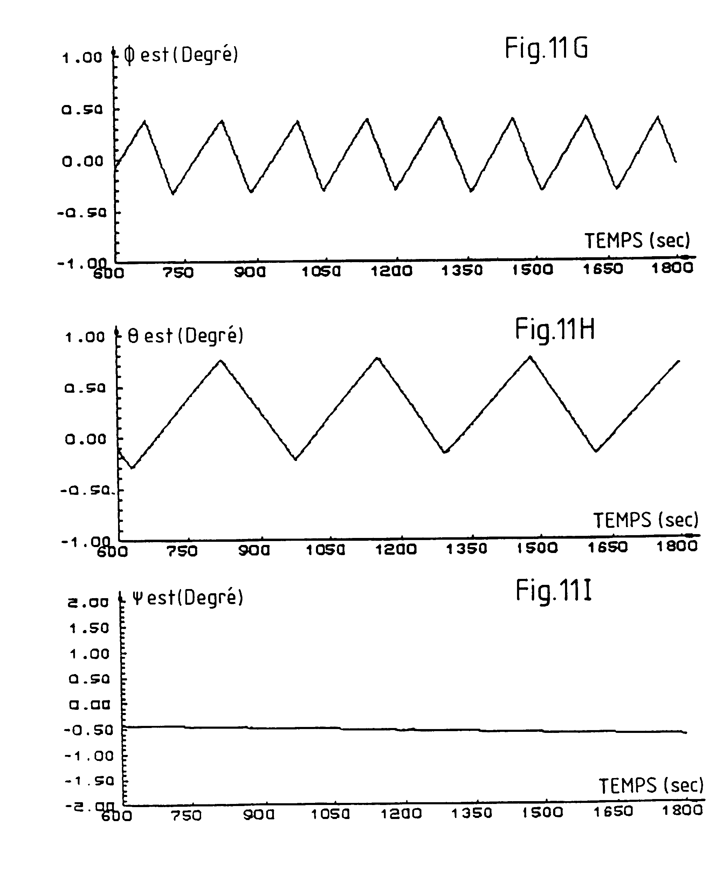

La figure 10 est un diagramme fonctionnel schématique simplifié, plus explicite que celui des figures 3 ou 7 et faisant en outre apparaître l'utilisation ultérieure des grandeurs estimées telle que définie par la figure 4.

Cette figure 10 fait apparaître diverses expressions synthétiques dont les figures 8A à 8D, 9A à 9D proposent des cas particuliers.

On désigne par M le vecteur colonne formé par les diverses mesures (3 ou 4 selon les cas, selon qu'il y a un ou deux capteurs solaires 1-axe) fournies par la logique 21 à partir des divers capteurs solaire(s), terrestre ou polaire, et par E1 le vecteur colonne formé par les trois angles d'attitude $\Phi$, $\Theta$ et $\Psi$.

Les diverses analyses faites plus haut à propos des mesures des capteurs permettent d'écrite :

$$M = B + C*E1$$

où :

. B est le vecteur colonne formé par les valeurs que prennent les termes de M lorsque E1 a des termes tous nuls, c'est-à-dire lorsque le trièdre satellite est parallèle au trièdre de référence.

. C est une matrice (3x3 ou 4x3 selon les cas) décrivant la dépendance de M vis à vis de E1, c'est-à-dire décrivant les relations entre les diverses mesures et les angles d'attitude.

Dans le cas, par exemple, de la figure 8A, on peut en effet écrire, à partir des équations écrites à propos des capteurs solaires et terrestre :

$$
\begin{vmatrix} \alpha st \\ \beta st \\ NS1 \\ NS2 \end{vmatrix}
=
\begin{vmatrix} 0 \\ \Delta v \\ N10 \\ N20 \end{vmatrix}
+
\begin{vmatrix} 1 & 0 & tg(\Delta v) \\ 0 & 1 & 0 \\ N1x & N1y & N1z \\ N2x & N2y & N2z \end{vmatrix}
\times
\begin{vmatrix} \Phi \\ \Theta \\ \Psi \end{vmatrix}
$$

De même dans le cas de la figure 8D on peut écrite, à partir des équations écrites à propos des capteurs solaire et polaire :

$$\begin{vmatrix} \alpha sp \\ \beta sp \\ NS1 \end{vmatrix} = \begin{vmatrix} -Prz/pry \\ -Prx/Pry \\ N10 \end{vmatrix} + \begin{vmatrix} 1 & 0 & 0 \\ 0 & 0 & 0 \\ N1x & N1y & N1z \end{vmatrix} * \begin{vmatrix} \Phi \\ \Theta \\ \Psi \end{vmatrix}$$

On notera que B et C sont déterminables de manière prédéterminée (c'est-à-dire déterminables selon des relations données) à partir des matrices définissant l'implantation des capteurs sur le satellite et des valeurs instantanées de Srx, Sry, Srz, Prx, Pry, Prz (c'est-à-dire de la position instantanée, dans le repère de référence choisi des venteurs unitaires du Soleil (vecteur Sr), et de l'Etoile Polaire (vecteur Pr) (en cas de détection Polaire), et de $\Delta v$ (en cas de détection terrestre).

La matrice H se déduit aisément de C par adjonction à droite de C de trois colonnes de termes nuls, c'est-à-dire :

$$H = \begin{vmatrix} C & : & 0 \end{vmatrix}$$

A la figure 10, le calcul en fonction de Srx, Sry, Srz et le Prx, Pry, Prz (cas de détection de Polaire) ou de $\Delta v$ (cas de détection de Terre) est effectué par un bloc 23B' qui est en fait différent du bloc 23B de la figure 7 en ce sens qu'il calcule en outre les termes de B qui dépendent de $\Delta v$ ou de Prx, Pry et Prz et qui, à la figure 7, sont calculés par le bloc 23C.

Le vecteur de mesure Z se déduit alors aisément du vecteur M par Z = M - B(c'est donc la partie de M qui varie directement avec l'attitude). Ce calcul est effectué par un bloc repéré 23C' à la figure 10 qui diffère du bloc 23C de la figure 7 en ce qu'il n'a pas à tenir compte de $\Delta v$ ou de Pr puisque ces grandeurs ont été prises en compte par le bloc 23B'.

On appréciera qu'il est identique d'écrire :

$$Z = C*E1 \text{ ou } Z = H*X$$

On désigne par A le vecteur colonne formé des trois incréments de rotation fournis par le bloc 23A d'intégration des mesures gyrométriques, et par E2 le vecteur colonne formé des dérives gyrométriques (A(k) et E2(k) étant les valeurs de ces vecteurs à l'instant t = k*Ts).

On peut alors, en formulation discrète, relier les valeurs de ces vecteurs aux instants k et (k + 1) par :

$$E1(k+1) = E1(k) - Ts*E2(k) + A(k) + D1$$

$$E2(k+1) = E2(k),$$

D1 étant formé par les angles d'un éventuel changement d'orientation du trièdre de référence dans lequel on mesure E1 et E2, et la deuxième équation traduisant que les dérives gyrométriques de E2 sont supposées être constantes en moyenne au cours du temps.

Si l'on tient compte de ce que X est un vecteur formé de la superposition des vecteurs E1 et E2 et en appelant D le vecteur colonne formé des trois termes de D1 puis de trois zéros, on peut alors écrire :

$$X(k+1) = F*X(k) + G*A(k) + D$$

$$Z(k) = H*X(k)$$

où F, G et H ont les formulations prédéterminées indiquées aux figures 8A, ..., 8D, 9A ... 9D. On retrouve ainsi, aux bruits près, les équations qui fondent le filtre de KALMAN. Il est rappelé à ce propos, que le filtre de KALMAN procède d'abord à une prédiction conformément à la première équation, puis à une correction de la valeur prédite de X par un terme (en fait une matrice) qui est le produit de l'écart entre les deux termes de la seconde équation par une matrice de gains.

Les termes des vecteurs E1 et E2, ainsi que le vecteur $\omega$ recensant les vitesses angulaires mesurées par les gyromètres, sont alors appliqués, comme cela apparaissait à la figure 4, aux trois étages parallèles de limiteurs/régulateurs (ils sont, globalement, représentés conjointement à la figure 10) pour donner le vecteur U formé des composantes à faire appliquer par les tuyères.

Lorsque les gyromètres sont de type intégrateurs, les termes de ω ne sont pas disponibles mais les termes du vecteur A sont alors directement mesurables. La partie droite du schéma de la figure 10 est alors modifiée en multipliant les termes de E2(k+1) par Ts et en les ajoutant à A et non plus ω.

Ces valeurs estimées font l'objet d'un test de convergence, et lorsque les valeurs des termes estimés de E2 deviennent constantes (à une tolérance préd8éterminée près) tandis que les termes de l'attitude estimée du satellite, c'est-à-dire E1, sont devenus également constants à une autre tolérance prédéterminée près, on stocke ces valeurs de E2 (ces valeurs de fin de calibration sont notées E2fc à la figure 10) pour les utiliser ensuite lorsque l'on cherche à contrôler l'attitude avec les gyromètres pendant un mode ultérieur (de poussée d'apogée, ou de maintien à poste) pendant lequel on peut alors appliquer à la logique de commande la seule différence des mesures instantanées des gyromètres et de leurs dérives constantes E2fc estimées précédemment lors de la calibration.

La phase de calibration est alors terminée. Sa durée est en pratique de 10 à 30 minutes si l'on choisit pour E1 des tolérances d'au plus 0,1°/h et si l'on choisit pour E2 des tolérances d'au plus 0,5°.

Dans le but d'illustrer les performances relatives à l'invention, deux exemples sont proposés :

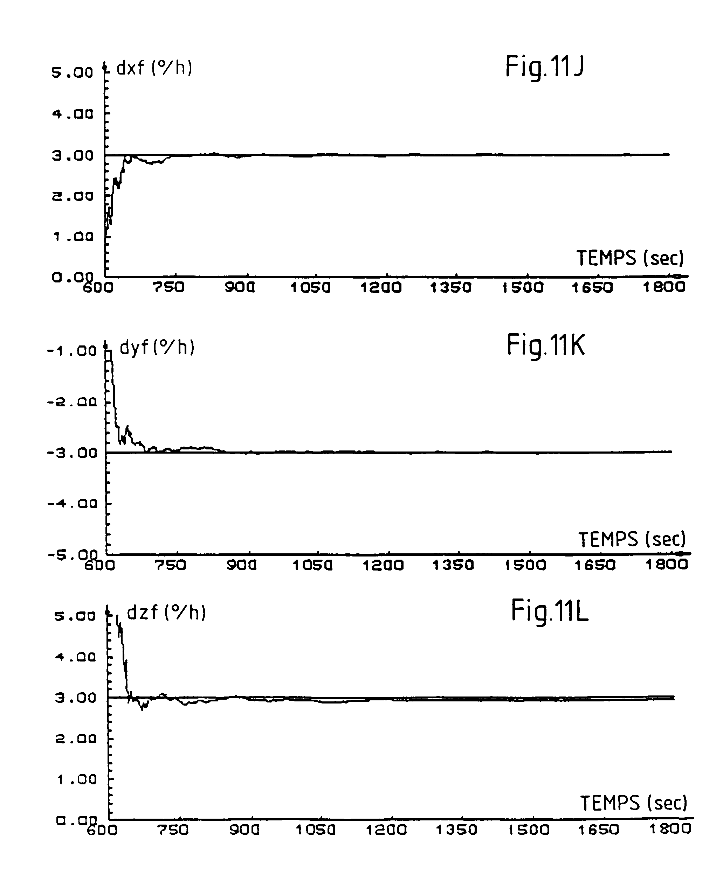

-  les figures 11A à 11L montrent le résultat de simulation dans un cas typique de calibration des dérives gyrométriques avec deux capteurs solaires et un capteur de Terre. Les biais constants des gyromètres X, Y et Z sont choisis égaux à +3°/h, -3°/h et +3°/h respectivement (valeur typique pour gyromètres équipant un satellite de télécommunication 3-axes). La phase de calibration démarre de t = 600 sec et les dérives gyrométriques sont estimées à mieux de 0,1°/h près vers t + 1200 sec (soit après 10 minutes) et pendant le même temps l'attitude du satellite est estimée avec une bonne précision et maintenue à moins de 0,5° sur les trois axes,

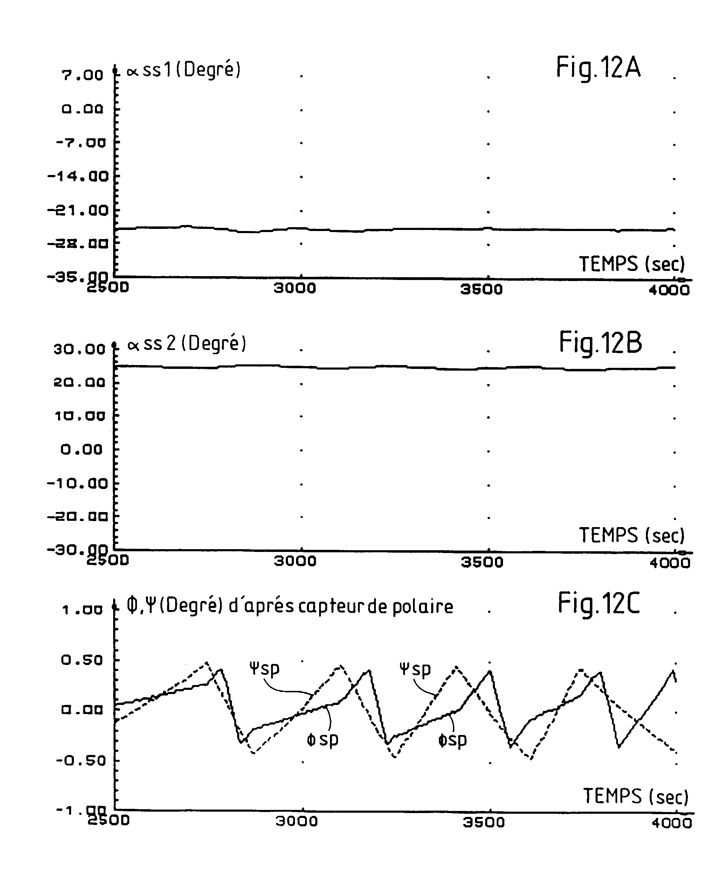

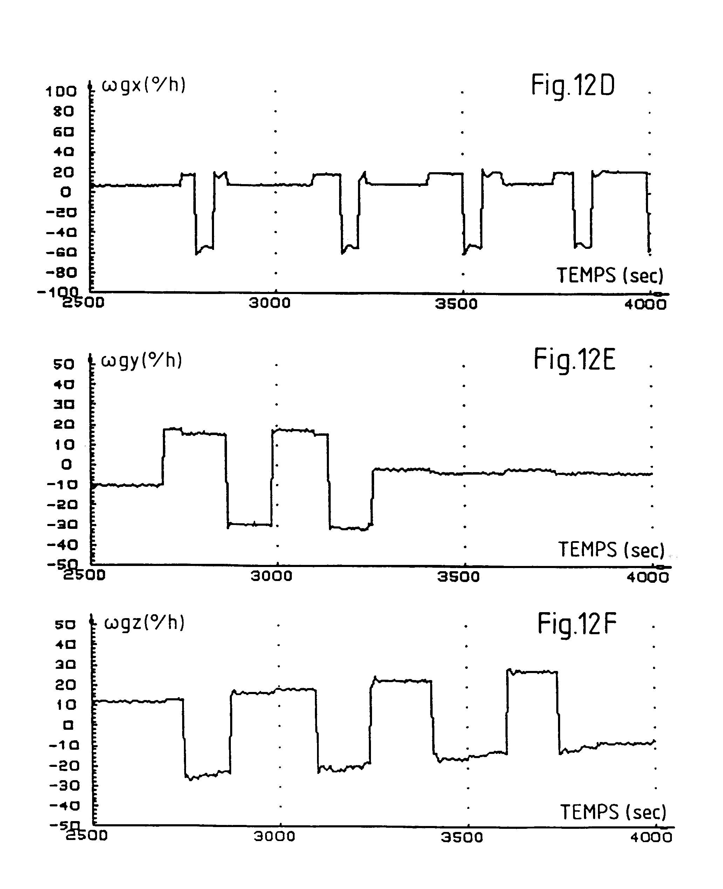

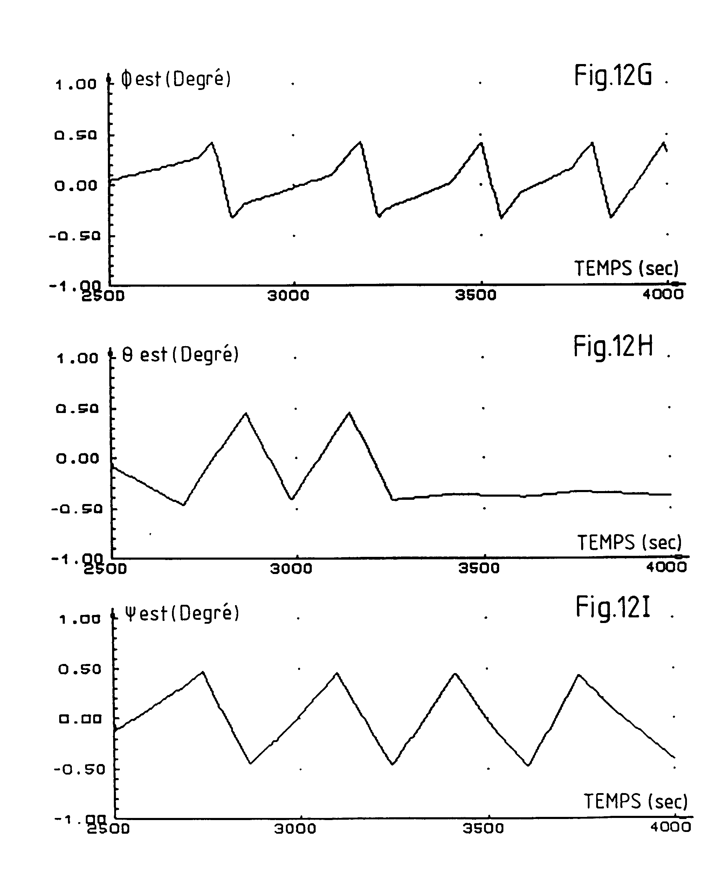

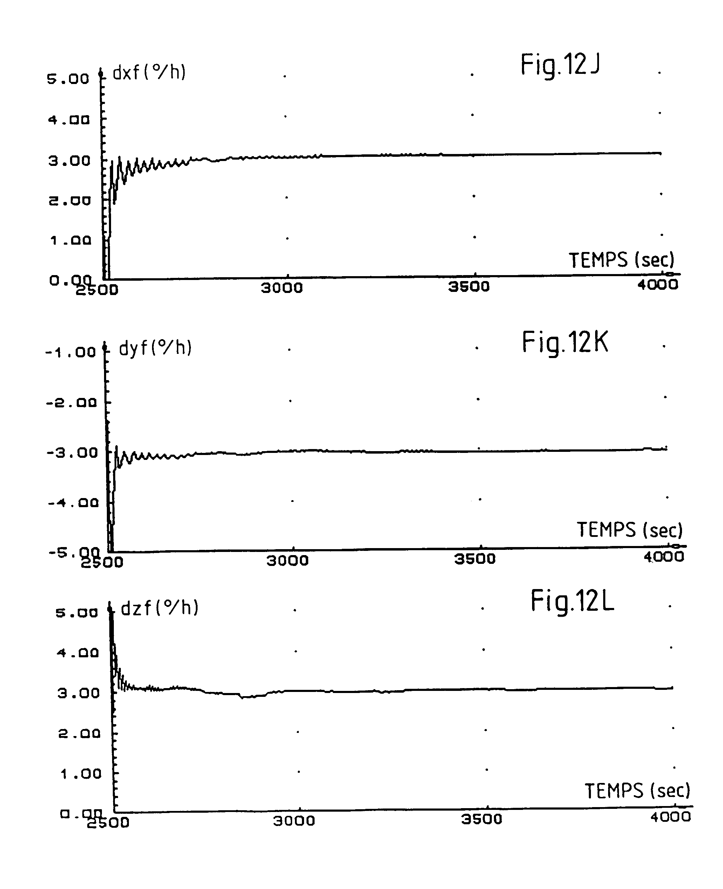

-  les figures 12A à 12L montrent les résultats de simulation pour une calibration des dérives gyrométriques avec deux capteurs solaires et un capteur de Polaire. Les biais constants à estimer sont identiques à ceux du cas précédent et la phase de calibration est démarrée à t = 2500 sec. Les performances de l'estimation des dérives et de contrôle des angles d'attitude sont équivalentes au cas précédent.

Ces simulations ont été conduites dans les conditions suivantes :

*  simulation avec capteur de Terre - figures 11A à 11L :

.  Ts = 500 ms

$$Q = \begin{vmatrix} I33 & 033 \\ 033 & 033 \end{vmatrix} * 1,37 . 10^{-12}$$

$$R = \begin{vmatrix} R1 & 022 \\ 022 & R2 \end{vmatrix}$$

avec

$$R1 = I22 * 8,46 . 10^{-8}$$

$$R2 = I22 * 7,32 . 10^{-8}$$

$$P(0) = \begin{vmatrix} P1 & P2 \\ P2 & P3 \end{vmatrix}$$

avec :

$$P1 = \begin{vmatrix} 3 & 3,7 & -7,7 \\ 3,7 & 11,4 & -19 \\ -7,7 & -19 & 38,5 \end{vmatrix} * 10^{-6}$$

$$P2 = \begin{vmatrix} -1,122 & -1,389 & 2,878 \\ -1,388 & -4,261 & 7,087 \\ 2,877 & 7,087 & -14,700 \end{vmatrix} * 10^{-8}$$

$$P3 = \begin{vmatrix} 6,09 & 6,835 & -14,17 \\ 6,835 & 21,72 & -35,15 \\ -14,170 & -35,15 & 71,80 \end{vmatrix} * 10^{-11}$$

. $x(0) = [\, 0\ 0\ 0\ 0\ 0\ 0\, ]^t$

\* simulation avec capteur de polaire - figures 12A à 12L :

. Ts = 200 ms
. même Q

$$R = \begin{vmatrix} R1 & 022 \\ 022 & R2 \end{vmatrix}$$

avec

$$R1 = I22 * 8,46.10^{-8}$$

$$R2 = I22 * 5,97.10^{-10}$$

. même P(0)
. même X(0)

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment que, ainsi qu'on l'a vu, il peut y avoir 1 ou 2 mesures solaires, mais on peut en outre n'utiliser qu'une seule mesure du capteur de Terre ou de Polaire. D'autre part, les enseignements de l'invention peuvent se généraliser à tout autre procédé de filtrage récursif (du type méthode des moindres carrés, ou du type LUENBERGER par exemple). Lorsqu'on utilise un détecteur de Polaire, l'orbite du satellite est de préférence choisie avec une inclinaison au plus égale à 10° environ par rapport au plan équatorial terrestre ; lorsque l'on utilise un détecteur terrestre, une inclinaison bien plus importante peut être envisagée.

**Revendications**

1. Procédé de calibration d'un ensemble de gyromètres dont est muni un satellite stabilisé 3-axes circulant sur une orbite, ce satellite comportant un ensemble de détection d'attitude (1, 3, 5, 21) incluant cet ensemble de gyromètres (5), un ensemble d'actionneurs (6) et une logique de commande (7 ; 24, 25, 26, 27) adaptée à appliquer à l'ensemble d'actionneurs des signaux de commande (Ui) à partir de signaux de mesure (M) fournis par l'ensemble de détection d'attitude, ce procédé selon lequel, à partir d'un instant to, on estime conjointement les erreurs d'attitude (E1) de ce satellite par rapport a un trièdre de référence avec des dérives constantes (E2) de cet ensemble de gyromètres autour de trois axes (XYZ) de ce satellite, étant caractérisé en ce que l'on applique en temps réel à cette logique de commande les valeurs estimées des erreurs d'attitude et la différence des mesures de vitesse ($\omega$) de l'ensemble de gyromètres et des valeurs estimées des dérives constantes, et on stocke ces valeurs estimées des dérives constantes lorsque celles-ci deviennent constantes à une première tolérance prédéterminée près et les valeurs estimées des erreurs d'attitude deviennent constantes à une seconde tolérance près.

2. Procédé selon la revendication 1, caractérisé en ce que la première tolérance près est de l'ordre de 0,1°/h et la seconde tolérance est de l'ordre de 0,5°.

3. Procédé selon la revendication 1 ou la revendication 2, caractérisé en ce qu'on estime les erreurs d'attitude (E1) et les dérives constantes (E2) à l'aide d'un filtre de KALMAN défini en notation discrète, par les équations :

$$Xp(k+1) = F*X(k) + G*A(k) + D$$

$$X(k+1) = Xp(k+1) + K(k+1) * [Z (k+1) - H(k+1) * Xp(k+1)]$$

où :

. k est un indice d'échantillonnage associé à l'instant t tel que t-to=k*Ts si Ts est le pas d'échantillonnage,
. X(k) est un vecteur colonne formé de trois valeurs d'attitude et de trois valeurs de dérives à l'instant k, par rapport au trièdre de référence,
. A(k) est un vecteur colonne formé de trois incréments de rotation à l'instant k, du satellite par rapport au trièdre de référence depuis l'instant (k-1),
. Z(k+1) est un vecteur colonne de mesure formé d'une pluralité $\underline{n}$ de signaux d'erreur définis chacun à l'instant (k+1) par la différence d'un signal de mesure fourni par l'ensemble de détection et d'un signal de consigne,
. Xp(k+1) est un vecteur colonne à six termes, prédit par la première équation pour l'instant (k+1),
. X(k+1) est un vecteur colonne à six termes, estimé à l'instant (k+1) selon la seconde équation à partir de Xp (k+1) et de Z(k+1),
. K(k+1) est une matrice de gains à six lignes et $\underline{n}$ colonnes,
. F et G sont des matrices d'état à termes constants, formées respectivement de six lignes et six colonnes et de six lignes et trois colonnes, décrivant des influences respectives théoriques de x(k) et A(k) sur X(k+1),
. D est un vecteur colonne formé de trois termes décrivant l'attitude du trièdre de référence à l'instant (k+1) par rapport au trièdre de référence à l'instant k et de trois termes nuls,
. H(k+1) est une matrice d'observation à $\underline{n}$ lignes et six colonnes dont les termes à l'instant (k+1) sont déterminables de façon prédéterminée, cette matrice décrivant des relations théoriques existant à tout instant (k+1) entre Z(k+1) et X(k+1).

4. Procédé selon la revendication 3, caractérisé en ce que la première équation se décompose en :

$$E1(k+1) = E1(k) - Ts*E2(k) + A(k) + D1$$

$$E2(k+1) = E2(k)$$

où :

. E1(k) et E1(k+1) sont formés de trois valeurs d'attitude de X(k) et de X(k+1),
. E2(k) et E2(k+1) sont formés des trois valeurs de dérives de X(k) et de X(k+1)
. D1 est formé des trois premiers termes de D et la matrice H s'écrit :

$$H(k+1) = | C(k+1) : 0n3 |$$

ou :

. 0n3 est une matrice nulle à n lignes et trois colonnes,
. C(k+1) est une matrice à n lignes et trois colonnes telle que l'on puisse écrire l'équation théorique :

$$Z(k+1) = C(k+1) * E1(k+1)$$

5. Procédé selon la revendication 3 ou la revendication 4, caractérisé en ce que Z(k+1) est formé d'au moins deux termes déduits de deux mesures d'un capteur de Terre ou d'Etoile, et d'au moins un terme déduit d'une mesure d'un capteur solaire 1-axe.

6. Procédé selon l'une quelconque des revendications 1 à 5, caractérisé en ce que le trièdre de référence est fixe dans l'espace.

7. Procédé selon la revendication 6, caractérisé en ce que l'orbite du satellite est une orbite de transfert.

8. Procédé selon la revendication 6 ou la revendication 7, caractérisé en ce que l'ensemble de détection d'attitude est formé d'au moins un capteur solaire 1-axe et d'un détecteur de Terre, et le trièdre de référence est un trièdre direct (Xr, Yr, Zr) tel que Yr est normal au plan de l'orbite, Zr est pointé vers la Terre à partir de la position orbitale du satellite à l'instant to et Xr est de même sens que la vitesse de défilement du satellite à l'instant to.

9. Procédé selon la revendication 6 ou la revendication 7, caractérisé en ce que l'ensemble de détection d'attitude est formé d'au moins un capteur solaire 1-axe et d'un détecteur stellaire pointé sur l'Etoile Polaire, l'orbite du satellite est à inclinaison au plus égale à 10° environ, et le trièdre de référence est un trièdre direct (Xr, Yr, Zr) tel que Yr est pointé vers le Sud géographique et Zr normal à la direction solaire (S) à l'instant to.

10. Procédé selon l'une quelconque des revendications 1 à 5, caractérisé en ce que le trièdre de référence est un trièdre Xr, Yr, Zr, tel que, à chaque instant, Yr est perpendiculaire au plan orbital, Zr est pointé vers la Terre et Xr est de même sens que la vitesse de défilement du satellite sur son orbite.

11. Procédé selon la revendication 10, caractérisé en ce que le satellite est sur une orbite circulaire.

12. Procédé selon la revendication 10 ou la revendication 11, caractérisé en ce que l'ensemble de détection d'attitude comporte au moins un capteur solaire 1-axe et un capteur terrestre 2-axes.

13. Procédé selon la revendication 10 ou la revendication 11, caractérisé en ce que le satellite est sur une orbite d'inclinaison au plus égale à 10° environ et l'ensemble de détection d'attitude comporte au moins un capteur solaire 1-axe et un capteur stellaire 2-axes destiné à être pointé sur l'Etoile Polaire.

14. Dispositif de contrôle d'attitude d'un satellite stabilisé 3-axes circulant sur une orbite, comportant un ensemble de détection d'attitude incluant un ensemble de gyromètres et un ensemble d'actionneurs commandé par une logique de commande dont l'entrée est connectée par une liaison à la sortie de l'ensemble de détection d'attitude, caractérisé en ce qu'il comporte en outre, en parallèle avec ladite liaison, un bloc d'estimation adapté à recevoir en entrée des valeurs instantanées de l'attitude du satellite par rapport à un trièdre de référence prédéterminé, et des mesures instantanées des gyromètres et à fournir en sortie des valeurs estimées de l'attitude du satellite et des dérives constantes des gyromètres, un ensemble de commutation étant prévu pour appliquer à la logique de commande, soit uniquement les sorties de l'ensemble de détection, soit les valeurs estimées fournies par le bloc d'estimation.

**15.** Dispositif selon la revendication 14, caractérisé en ce que l'ensemble de détection d'attitude comporte au moins un capteur solaire 1-axe et un capteur terrestre 2-axes.

**16.** Dispositif selon la revendication 14, caractérisé en ce que l'ensemble de détection d'attitude comporte au moins un capteur solaire 1-axe et un capteur stellaire 2-axes destiné à être pointé sur l'Etoile Polaire.

**17.** Dispositif selon l'une quelconque des revendications 14 à 16, caractérisé en ce que la logique de commande comporte un ensemble (24) de régulateurs linéaires et de limiteurs, d'un ensemble de filtres (25) et d'un ensemble (26) de modulateurs non linéaires.

**18.** Dispositif selon la revendication 17, caractérisé en ce que les régulateurs linéaires sont du type Proportionnel-Dérivé.

**19.** Dispositif selon la revendication 17, caractérisé en ce que les régulateurs linéaires sont du type Proportionnel-Intégral-Dérivé.

**20.** Dispositif selon l'une quelconque des revendications 17 à 19, caractérisé en ce que les filtres sont digitaux du second ordre.

**21.** Dispositif selon l'une quelconque des revendications 17 à 20, caractérisé en ce que les modulateurs sont de type PRM (Pseudo-Rate Modulator).

**22.** Dispositif selon l'une quelconque des revendications 17 à 20, caractérisé en ce que les modulateurs sont de type PWPF (Pulse-Width Pulse Frequency Modulator).

**Patentansprüche**

**1.** Verfahren zur Kalibrierung einer Einheit von Kreiseln, mit denen ein dreiachsenstabilisierter Satellit, der auf einem Orbit kreist, ausgerüstet ist, wobei dieser Satellit eine Einheit zur Detektierung der Höhe (1, 3, 5, 21), die diese Einheit von Kreiseln (5) einschließt, eine Einheit von Antrieben (6) und eine Regelungslogik (7; 24, 25, 26, 27) aufweist, die dafür ausgelegt ist, der Einheit von Antrieben ausgehend von Meßsignalen (M), die von der Einheit zur Detektierung der Höhe geliefert werden, Regelsignale (Ui) anzulegen, wobei dieses Verfahren, gemäß dem man ausgehend von einem Zeitpunkt to die Abweichungen der Höhe (E1) dieses Satelliten in bezug auf ein Bezugsachsenkreuz mit den konstanten Driften (E2) dieser Einheit von Kreiseln um drei Achsen (XYZ) dieses Satelliten zusammen abschätzt, dadurch gekennzeichnet ist, daß man in Echtzeit dieser Regelungslogik die geschätzten Werte der Abweichungen der Höhe und die Differenz der Messungen der Geschwindigkeit (ω) der Einheit von Kreiseln und der geschätzten Werte der konstanten Driften eingibt und man diese geschätzten Werte der konstanten Driften speichert, wenn jene abgesehen von einer ersten vorgegebenen Toleranz konstant werden und die geschätzten Werte der Abweichungen der Höhe bis auf eine zweite Toleranz konstant werden.

**2.** Verfahren nach Anspruch 1, dadurch gekennzeichnet, daß die erste Toleranz von der Größenordnung von 0,1°/h und die zweite Toleranz von der Größenordnung von 0,5° ist.

**3.** Verfahren nach Anspruch 1 oder 2, dadurch gekennzeichnet, daß die Abweichungen der Höhe (E1) und die konstanten Driften (E2) mit Hilfe eines KALMAN-Filters geschätzt werden, der in diskreter Darstellung durch die folgenden Gleichungen definiert ist:

$$Xp(k+1) = F*X(k) + G*A(k) + D$$

$$X(k+1) = Xp(k+1) + K(k+1) * [Z(k+1) - H(k+1) * Xp(k+1)]$$

wobei

k          eine Vergleichszahl der Stichprobenerhebung ist, die mit dem Zeitpunkt t so verknüpft ist, daß t-to = k*Ts, wenn Ts der Schritt der Stichprobenerhebung ist,

X(k)    ein Spaltenvektor ist, der aus drei Werten der Höhe und drei Werten der Driften zum Zeitpunkt k in bezug auf das Bezugsachsenkreuz gebildet wird,

A(k)    ein Spaltenvektor ist, der aus drei Roatiationsinkrementen des Satelliten in bezug auf das Bezugsachsenkreuz zum Zeitpunkt k nach dem Zeitpunkt (k-1) gebildet wird,

Z(k+1)  ein Meßspaltenvektor ist, der aus einer Vielzahl $\underline{n}$ von Abweichungssignalen gebildet wird, von denen jedes zum Zeitpunkt (k+1) durch die Differenz eines Meßsignals, das von der Detektierungseinheit geliefert wird, und eines Einstellsignals gebildet wird,

Xp(k+1) ein sechsgliedriger Spaltenvektor ist, der durch die erste Gleichung für den Zeitpunkt (k+1) vorgegeben wird,

X(k+1)  ein sechsgliedriger Spaltenvektor ist, der gemäß der zweiten Gleichung ausgehend von Xp(k+1) und von Z(k+1) zum Zeitpunkt (k+1) geschätzt wird,

K(k+1)  eine Verstärkungsmatrix mit sechs Zeilen und $\underline{n}$ Spalten ist,

F und G Zustandsmatritzen mit konstanten Gliedern sind, die jeweils aus sechs Zeilen und sechs Spalten und aus sechs Zeilen und drei Spalten gebildet sind und die jeweiligen theoretischen Einflüsse von x(k) und A(k) auf X(k+1) beschreiben,

D       ein Spaltenvektor ist, der aus drei Gliedern, die die Höhe des Bezugsachsenkreuzes zum Zeitpunkt (k+1) in bezug auf das Bezugsachsenkreuz zum Zeitpunkt des k beschreiben, und aus drei Nullgliedern gebildet ist,

H(k+1)  eine Beobachtungsmatrix mit $\underline{n}$ Zeilen und sechs Spalten ist, deren Glieder zum Zeitpunkt (k+1) auf vorgegebene Weise bestimmbar sind, wobei diese Matrix die theoretischen Beziehungen, die zu jedem Zeitpunkt (k+1) zwischen Z(k+1) und X(k+1) bestehen, beschreibt.

4. Verfahren nach Anspruch 3, dadurch gekennzeichnet, daß die erste Gleichung in die folgenden Teile zerfällt:

$$E1(k+1) = E1(k) - Ts*E2(k) + A(k) + D1$$

$$E2(k+1) = E2(k)$$

wobei

E1(k) und E1(k+1) aus drei Höhenwerten von X(k) und von X(k+1) gebildet werden,
E2(k) und E2(k+1) aus drei Driftwerten von X(k) und von X(k+1) gebildet werden,
D1 aus den drei ersten Gliedern von D und der Matrix H gebildet wird, die sich wie folgt schreibt:

$$H(k+1) \; = \; |\; C(k+1); 0n3 \; |$$

wobei

0n3 eine Nullmatrix mit n Zeilen und drei Spalten ist, C(k+1) eine Matrix mit n Zeilen und drei Spalten ist, so daß man folgende theoretische Gleichung aufstellen kann:

$$Z(k+1) = C(k+1) * E1(k+1).$$

5. Verfahren nach Anspruch 3 oder 4, dadurch gekennzeichnet, daß Z(k+1) aus zumindest zwei Gliedern, die aus zwei Messungen eines Erd- oder Sternensensors hergeleitet sind, und aus mindestens einem Glied, das aus einer Messung eines einachsigen Solarsensors hergeleitet ist, gebildet wird.

6. Verfahren nach mindestens einem der Ansprüche 1 bis 5, dadurch gekennzeichnet, daß das Bezugsachsenkreuz im Raum ortsfest ist.

7. Verfahren nach Anspruch 6, dadurch gekennzeichnet, daß der Orbit des Satelliten eine Übergangsorbit ist.

8. Verfahren nach Anspruch 6 oder 7, dadurch gekennzeichnet, daß die Detektierungseinheit für die Höhe aus mindestens einem einachsigen Solarsensor und einem Erddetektor gebildet wird, und daß das Bezugsachsenkreuz ein gerades Achsenkreuz (Xr, Yr, Zr) ist, so daß Yr senkrecht zur Orbitebene ist, Zr ausgehend von der Orbitalposition des Satelliten zum Zeitpunkt to zur Erde hin gerichtet ist und Xr die gleiche Richtung hat wie die Umlaufgeschwindigkeit des Satelliten zum Zeitpunkt to.

9. Verfahren nach Anspruch 6 oder 7, dadurch gekennzeichnet, daß die Detektierungseinheit für die Höhe aus mindestens einem einachsigen Solarsensor und einem Sternendetektor, der zum Polarstern hin gerichtet ist, gebildet wird, wobei der Orbit des Satelliten um höchstens etwa 10° geneigt ist und wobei das Bezugsachsenkreuz ein gerades Achsenkreuz (Xr, Yr, Zr) ist, so daß Yr zum geographischen Süden hin gerichtet ist und Zr zum Zeitpunkt to senkrecht zur Solarrichtung (S) ist.

10. Verfahren nach mindestens einen der Ansprüche 1 bis 5, dadurch gekennzeichnet, daß das Bezugsachsenkreuz ein Achsenkreuz Xr, Yr, Zr ist, so daß zu jedem Zeitpunkt Yr senkrecht zur Orbitalebene ist, Zr zur Erde hin gerichtet ist und Xr die gleiche Richtung hat wie die Umlaufgeschwindigkeit des Satelliten auf seinem Orbit.

11. Verfahren nach Anspruch 10, dadurch gekennzeichnet, daß der Satellit auf einem kreisförmigen Orbit ist.

12. Verfahren nach Anspruch 10 oder 11, dadurch gekennzeichnet, daß die Detektierungseinheit für die Höhe mindestens einen einachsigen Solarsensor und einen zweiachsigen Erdsensor aufweist.

13. Verfahren nach Anspruch 10 oder 11, dadurch gekennzeichnet, daß der Satellit auf einem Orbit mit einer Neigung von höchstens etwa 10° ist und daß die Detektierungseinheit für die Höhe mindestens einen einachsigen Solarsensor und einen zweiachsigen Sternensensor aufweist, der dazu bestimmt ist, zum Polarstern hin gerichtet zu werden.

14. Vorrichtung zum Kontrollieren der Höhe eines dreiachsenstabiliserten Satelliten, der auf einem Orbit kreist, aufweisend eine Detetkierungseinheit für die Höhe, die eine Einheit von Kreiseln einschließt, und eine Einheit von Antrieben, die durch eine Regelungslogik angesteuert wird, deren Eingang durch eine Verbindung mit dem Ausgang der Detektierungseinheit für die Höhe verbunden ist, dadurch gekennzeichnet, daß sie außerdem parallel zur genannten Verbindung einen Block für die Schätzung aufweist, der dafür ausgelegt ist, am Eingang Momentanwerte der Höhe des Satelliten in bezug auf ein vorgegebenes Bezugsachsenkreuz und momentane Messungen der Kreisel zu empfangen und am Ausgang Schätzwerte für die Höhe des Satelliten und der konstanten Driften der Kreisel zu liefern, wobei eine Umschalteinheit vorgesehen ist, um an die Regelungslogik entweder nur die Ausgänge der Detektierungseinheit oder die Schätzwerte, die vom Block für die Schätzung geliefert werden, anzulegen.

15. Vorrichtung nach Anspruch 14, dadurch gekennzeichnet, daß die Detektierungseinheit für die Höhe mindestens einen einachsigen Solarsensor und einen zweiachsigen Erdsensor aufweist.

16. Vorrichtung nach Anspruch 14, dadurch gekennzeichnet, daß die Detektierungseinheit für die Höhe mindestens einen einachsigen Solarsensor und einen zweiachsigen Sternensensor aufweist, der dazu bestimmt ist, zum Polarstern hin gerichtet zu werden.

17. Vorrichtung nach mindestens einem der Ansprüche 14 bis 16, dadurch gekennzeichnet, daß die Regelungslogik eine Einheit (24) linearer Regler und Begrenzer, eine Einheit von Filtern (25) und eine Einheit (26) von nichtlinearen Modulatoren aufweist.

18. Vorrichtung nach Anspruch 17, dadurch gekennzeichnet, daß die linearen Regler Proportional - Differentialregler sind.

19. Vorrichtung nach Anspruch 17, dadurch gekennzeichnet, daß die linearen Regler Proportional - Integral - Differentialregler sind.

20. Vorrichtung nach mindestens einem der Ansprüche 17 bis 19, dadurch gekennzeichnet, daß die Filter Digitalfilter der zweiten Ordnung sind.

21. Vorrichtung nach mindestens einem der Ansprüche 17 bis 20, dadurch gekennzeichnet, daß die Modulatoren PRM-Modulatoren (Pseudo-Rate Modulator) sind.

**22.** Vorrichtung nach mindestens einem der Ansprüche 17 bis 20, dadurch gekennzeichnet, daß die Modulatoren PWPF-Modulatoren (Pulsbreite-Pulsfrequenzmodulator) sind.

**Claims**

1. Method of calibrating a set of rate gyros on a three-axis stabilized satellite in orbit and including an attitude sensing system (1, 3, 5, 21) including said set of rate gyros (5), a set of actuators (6) and control logic (7; 24, 25, 26, 27) adapted to apply to the set of actuators control signals (Ui) derived from measurement signals (M) supplied by the attitude sensing system, this method whereby, from a time to, attitude errors (E1) of the satellite relative to a reference frame of reference and constant drift (E2) of the set of rate gyros about three axes (XYZ) of the satellite are conjointly estimated, being characterized in that there are applied in real time to said control logic the estimated values of the attitude errors and the difference between the speed measurements ($\omega$) of the set of rate gyros and the estimated values of constant drift, and these estimated constant drift values are stored when they become constant to within a predetermined first tolerance and the estimated attitude error values become constant to within a second tolerance.

2. Method according to claim 1 characterized in that the first tolerance is in the order of 0.1°/h and the second tolerance is in the order of 0.5°.

3. Method according to claim 1 or claim 2 characterized in that the attitude errors (E1) and the constant drifts (E2) are estimated by means of a KALMAN filter defined by the following equations, using discrete notation:

$$Xp(k+1) = F*X(k) + G*A(k) + D$$

$$X(k+1) = Xp(k+1) + K(k+1) * [Z(k+1) - H(k+1) * Xp(k+1)]$$

where:

- k is a sampling index associated with time t such that t-to=k*Ts where Ts is the sampling increment,
- X(k) is a column vector formed of three attitude values and three drift values at time k, relative to the reference frame of reference,
- A(k) is a column vector formed of three rotation increments at time k of the satellite relative to the reference frame of reference from time (k-1),
- Z(k+1) is a measurement column vector formed of a plurality of $\underline{n}$ error signals each defined at time (k+1) by the difference between a measurement signal supplied by the sensing system and a set point signal,
- Xp(k+1) is a six-term column vector predicted by the first equation for time (k+1),
- X(k+1) is a six-term column vector estimated at time (k+1) using the second equation from Xp(k+1) and Z(k+1),
- K(k+1) is a gain matrix with six rows and n columns,
- F and G are constant term state matrices respectively having six rows and six columns and six rows and three columns describing the respective theoretical influences of x(k) and A(k) on X(k+1),
- D is a column vector formed of three terms describing the attitude of the reference frame of reference at time (k+1) relative to the reference frame of reference at time k and three null terms,
- H(k+1) is an observation matrix with $\underline{n}$ rows and six columns of which the terms at time (k+1) are predetermined, this matrix describing the theoretical relations at any time (k+1) between Z(k+1) and X(k+1).

4. Method according to claim 3 characterized in that the first equation is broken down as follows:

$$E1(k+1) = E1(k) - Ts*E2(k) + A(k) + D1$$

$$E2(k+1) = E2(k)$$

where:

- E1(k) and E1(k+1) are formed of three attitude values of X(k) and of X(k+1),
- E2(k) and E2(k+1) are formed of three drift values of X(k) and X(k+1),
- D1 is formed of the first three terms of D and the matrix H is written:

$$H(k+1) \; = \; | \; C(k+1) \; \vdots \; 0n3 \; |$$

where:
- 0n3 is a null matrix with n rows and three columns,
- C(k+1) is a matrix with n rows and three columns such that the following theoretical equation can be written:

$$Z(k+1) = C(k+1) * E1(k+1).$$

5. Method according to claim 3 or claim 4 characterized in that Z(k+1) is formed of at least two terms deduced from two measurements of an Earth or star sensor and at least one term deduced from a measurement by a single-axis solar sensor.

6. Method according to any one of claims 1 to 5 characterized in that the reference frame of reference is fixed in space.

7. Method according to claim 6 characterized in that the orbit of the satellite is a transfer orbit.

8. Method according to claim 6 or claim 7 characterized in that the attitude sensing system is formed of at least one single-axis solar sensor and one Earth sensor and the reference frame of reference is a direct frame of reference (Xr, Yr, Zr) such that Yr is normal to the plane of the orbit, Zr points towards the Earth from the orbital position of the satellite at time to and Xr is in the same direction as the motion of the satellite at time to.

9. Method according to claim 6 or claim 7 characterized in that the attitude sensing system is formed of at least one single-axis solar sensor and one star sensor pointing at the Pole Star, the orbit of the satellite is at an inclination of not more than approximately 10°, and the reference frame of reference is a direct frame of reference (Xr, Yr, Zr) such that Yr points towards the geographical South and Zr is normal to the solar direction (S) at time to.

10. Method according to any one of claims 1 to 5 characterized in that the reference frame of reference is a frame of reference Xr, Yr, Zr such that Yr is instantaneously perpendicular to the orbital plane, Zr is instantaneously pointed towards the Earth and Xr is instantaneously in the same direction of the motion of the satellite in its orbit.

11. Method according to claim 10 characterized in that the satellite is in a circular orbit.

12. Method according to claim 10 or claim 11 characterized in that the attitude sensing system includes at least one single-axis solar sensor and one two-axis terrestrial sensor.

13. Method according to claim 10 or claim 11 characterized in that the satellite is in an orbit with an inclination of not more than approximately 10° and the attitude sensing system includes at least one single-axis solar sensor and one two-axis solar sensor adapted to point towards to the Pole Star.

14. Attitude control device of a three-axis stabilized satellite in orbit including an attitude sensing system including a set of rate gyros and a set of actuators controlled by control logic whose input is connected by a link to the output of the attitude sensing system, characterized in that it further includes, in parallel with said link, an estimator unit adapted to receive at its input instantaneous values of the attitude of the satellite relative to a predetermined reference frame of reference and instantaneous measurements from rate gyros and to supply at its output estimated values of the attitude of the satellite and the constant drift of the rate gyros, a switching system being provided for applying to the control logic either only the outputs of the sensing system or the estimated values provided by the estimator unit.

15. Device according to claim 14 characterized in that the attitude sensing system includes at least one single-axis solar sensor and one two-axis terrestrial sensor.

16. Device according to claim 14 characterized in that the attitude sensing system includes at least one single-axis solar sensor and one two-axis star sensor adapted to be pointed towards the Pole Star.

17. Device according to any one of claims 14 to 16 characterized in that the control logic includes a set (24) of linear regulators and limiters, a set (25) of filters and a set (26) of non-linear modulators.

18. Device according to claim 17 characterized in that the linear regulators are of the proportional-derivative type.

19. Device according to claim 17 characterized in that the linear regulators are of the proportional-integral-derivative type.

20. Device according to any one of claims 17 to 19 characterized in that the filters are second order digital filters.

21. Device according to any one of claims 17 to 20 characterized in that the modulators are pseudo-rate modulators (PRM).

22. Device according to any one of claims 17 to 20 characterized in that the modulators are pulse width pulse frequency (PWPF) modulators.

SOLEIL

Zss1
Zss2
∝s1
Yss1
∝s2
Yss2

X

3A

Xst
βst
Zst
∝st
Yst

5

1A
1B

6

Z

7

Y

TERRE

Fig.1A

Fig.1B

Fig.2A

Fig.2B

Fig.3

Fig.4

$$U_x \longrightarrow \frac{a_{xo} + a_{x1} Z^{-1} + a_{x2} Z^{-2}}{b_{x0} + b_{x1} Z^{-1} + b_{x2} Z^{-2}} \longrightarrow U_{fx}$$

25

$$U_y \longrightarrow \frac{a_{yo} + a_{y1} Z^{-1} + a_{y2} Z^{-2}}{b_{y0} + b_{y1} Z^{-1} + b_{y2} Z^{-2}} \longrightarrow U_{fy}$$

$$U_z \longrightarrow \frac{a_{zo} + a_{z1} Z^{-1} + a_{z2} Z^{-2}}{b_{z0} + b_{z1} Z^{-1} + b_{z2} Z^{-2}} \longrightarrow U_{fz}$$

Fig.5

X(t)

X(t) = Ufi
i = x,y,z

R(t)

$$\frac{1}{1+T_m.p}$$

Y(t)

Y(t) = Uci
i = x,y,z

Fig.6

Pss1 →
Pss2 →
Srx →
Sry →
Srz →

**23B**

CALCUL
MATRICE
D'OBSER-
VATION

H →

Δv →

N10    N20

**23C**

NS1 →
NS2 →
αst / αsp →
βst / βsp →
Prx →
Pry →
Prz →

CALCUL
DU
VECTEUR
DE
MESURE
DES
CAPTEURS

Z →

Φf(k) →
Θf(k) →
Ψf(k) →
dxf(k) →
dyf(k) →
dzf(k) →

{ P(k)
  ou    K∞ →

**23**

**FILTRE DE KALMAN   TEST+STOCKAGE**

→ Φf(k+1)

→ Θf(k+1)

→ Ψf(k+1)

→ dxf(k+1)

→ dyf(k+1)

→ dzf(k+1)

**23D**

ωgx →
ωgy →
ωgz →

INTEGRATION
DES
MESURES
GYROS

αgx →
αgy →
αgz →

→ P(k+1)

**23A**

Ts

ω0   Q   R   P(0)   Ts

Fig.7

33

Pss1

Pss2

Srx

Sry

Srz

$\Delta v$

L11=[1ère ligne de Pss1]t , L12=[1ère ligne de Pss2]t
L21=[2ème ligne de Pss1]t , L22=[2ème ligne de Pss2]t
L31=[3ème ligne de Pss1]t , L32=[3ème ligne de Pss2]t
Sr = [ Srx , Sry , Srz ] t

N10=(L11.Sr)/(L31.Sr) , N20=(L12.Sr)/(L32.Sr)
N1T=[(L21.Sr).Sr-L21]/(L31.Sr)**2 , N2T=[(L22.Sr).Sr-L22]/(L32.Sr)**2

$$H = \frac{\begin{bmatrix} 1 & 0 & tg(\Delta v) & ; & 0 & 0 & 0 \\ 0 & 1 & 0 & ; & 0 & 0 & 0 \end{bmatrix}}{\begin{bmatrix} & N1T & ; & 0 & 0 & 0 \\ & N2T & ; & 0 & 0 & 0 \end{bmatrix}}$$

N10      N20        H

NS1

NS2

$\alpha$st

$\beta$st

$Z1 = \alpha st$

$Z2 = \beta st - \Delta v$

$Z3 = NS1 - N10$

$Z4 = NS2 - N20$

Z

$\Phi f(k)$

$\Theta f(k)$

$\Psi f(k)$

$dxf(k)$

$dyf(k)$

$dzf(k)$

$P(k)$

$K\infty$

$$F = \frac{[ I33 ; -Ts * I33 ]}{[O33 ; I33 ]}$$

$$G = \frac{[ I33 ]}{[O33]} \quad ; \quad A = \begin{bmatrix} \alpha gx \\ \alpha gy \\ \alpha gz \end{bmatrix}$$

$X=[\phi f, \theta f, \psi f, dxf, dyf, dzf]$

Prédiction :

$Xp(k+1) = F.X(k) + G.A(k)$

$Pp(k+1) = F.P(k).F^t + Q$

$DD = (H.Pp(k+1).H^t + R)^{-1}$

$K(k+1) = Pp(k+1).H^t.DD$

Correction :

$Dz = Z(k+1) - H(k+1).Xp(k+1)$

$X(k+1) = Xp(k+1) + K(k+1).Dz$

$P(k+1) = Pp(k+1) - K(k+1).H(k+1).Pp(k+1)^t$

$\Phi f(k+1)$

$\Theta f(k+1)$

$\Psi f(k+1)$

$dxf(k+1)$

$dyf(k+1)$

$dzf(k+1)$

$P(k+1)$

$\omega gx$

$\omega gy$

$\omega gz$

$\alpha gx = \omega gx * Ts$

$\alpha gy = \omega gy * Ts$

$\alpha gz = \omega gz * Ts$

$\alpha gx$

$\alpha gy$

$\alpha gz$

Ts

Q   R   P0   Ts

Fig.8A

Fig.8B

Fig.8C

Fig.8D

Pss1 →

Pss2 →

Srx →

Sry →

Srz →

L11=[1ère ligne de Pss1]t , L12=[1ère ligne de Pss2]t
L21=[2ème ligne de Pss1]t , L22=[2ème ligne de Pss2]t
L31=[3ème ligne de Pss1]t , L32=[3ème ligne de Pss2]t
Sr = [ Srx , Sry , Srz ] t

N10=(L11.Sr)/(L31.Sr) , N20=(L12.Sr)/(L32.Sr)
N1T=[(L21.Sr).Sr-L21]/(L31.Sr)**2 , N2T=[(L22.Sr).Sr-L22]/(L32.Sr)**2

$$H = \begin{bmatrix} 1 & 0 & 0 & ; & 0 & 0 & 0 \\ 0 & 1 & 0 & ; & 0 & 0 & 0 \\ \hline & N1T & & ; & 0 & 0 & 0 \\ & N2T & & ; & 0 & 0 & 0 \end{bmatrix}$$

N10    N20    H

NS1 →

NS2 →

αst →

βst →

Z1 = αst

Z2 = βst

Z3 = NS1 - N10

Z4 = NS2 - N20

Z →

$$F = \frac{[\, I33 \; ; \; -Ts * I33 \,]}{[\, O33 \; ; \; I33 \quad\;]}$$

$$G = \frac{[\, I33 \,]}{[\, O33 \,]} \; ; \; A = \begin{bmatrix} \alpha gx \\ \alpha gy \\ \alpha gz \end{bmatrix} , \; D = \begin{bmatrix} 0 \\ d \\ 0 \\ \hline 0 \\ 0 \\ 0 \end{bmatrix}$$

( d = ω0 * Ts)

Φf(k) ———————————

Θf(k) ———————————

Ψf(k) ———————————

dxf(k) ———————————

dyf(k) ———————————

dzf(k) ———————————

P(k) - - - - - - - - - →

K∞ ———————————

X=[φf, θf, ψf, dxf, dyf, dzf]

Prédiction :

Xp(k+1) =F.X(k) + G.A(k) + D

Pp(k+1) =F.P(k).F$^t$ + Q

DD =(H.Pp(k+1).H$^t$ + R )$^{-1}$

K(k+1)=Pp(k+1).H$^t$ DD

Correction :

Dz =Z(k+1)-H(k+1).Xp(k+1)

X(k+1) = Xp(k+1)
            + K(k+1).Dz

P(k+1) = Pp(k+1)
         - K(k+1).H(k+1).Pp(k+1)$^t$

→ Φf(k+1)

→ Θf(k+1)

→ Ψf(k+1)

→ dxf(k+1)

→ dyf(k+1)

→ dzf(k+1)

- - → P(k+1)

ωgx →

ωgy →

ωgz →

αgx = ωgx * Ts
αgy = ωgy * Ts
αgz = ωgz * Ts

αgx

αgy

αgz

Ts

ω0   Q   R   P0   Ts

## Fig.9A

Fig.9B

Fig.9C

Pss1 →

L11=[1ère ligne de Pss1]t , L21=[2ème ligne de Pss1]t ,
L31=[3ème ligne de Pss1]t

Sr = [ Srx , Sry , Srz ]t

Srx →
Sry →
Srz →

N10=(L11.Sr)/(L31.Sr)    , N1T=[((L21.Sr).Sr-L21]/(L31.Sr)**2

$$H = \frac{\begin{bmatrix} 1 & 0 & 0 & ; & 0 & 0 & 0 \\ 0 & 0 & 1 & ; & 0 & 0 & 0 \end{bmatrix}}{\begin{bmatrix} & N1T & & ; & 0 & 0 & 0 \end{bmatrix}}$$

N10

NS1 →
αsp →
βsp →
Prx →
Pry →
Prz →

Z1 = αsp + Prz/Pry

Z2 = βsp - Prx/Pry

Z3 = NS1 - N10

Z →

H

$$F = \frac{[ \, I33 \, ; \, -Ts \cdot I33 \, ]}{[O33 \, ; \quad I33 \quad ]}$$

$$G = \frac{[ \, I33 \, ]}{[O33]} \quad ; A = \begin{bmatrix} \alpha gx \\ \alpha gy \\ \alpha gz \end{bmatrix} , D = \begin{bmatrix} 0 \\ d \\ 0 \\ \vdots \\ 0 \\ 0 \\ 0 \end{bmatrix}$$

( d = ω0 * Ts)

Φf(k) →
Θf(k) →
Ψf(k) →
dxf(k) →
dyf(k) →
dzf(k) →
P(k) →
K∞ →

X=[φf, θf, ψf, dxf, dyf, dzf]

Prédiction :

Xp(k+1) =F.X(k) + G.A(k) + D

Pp(k+1) =F.P(k).F$^t$ + Q

DD =(H.Pp(k+1).H$^t$ + R)$^{-1}$

K(k+1)=Pp(k+1).H$^t$.DD

Correction :

Dz =Z(k+1)-H(k+1).Xp(k+1)

X(k+1) = Xp(k+1)
         + K(k+1).Dz
P(k+1) = Pp(k+1) - K(k+1).H(k+1).Pp(k+1)$^t$

ωgx →
ωgy →
ωgz →

αgx = ωgx * Ts
αgy = ωgy * Ts
αgz = ωgz * Ts

αgx
αgy
αgz

Ts

ω0   Q   R   P0   Ts

→ Φf(k+1)
→ Θf(k+1)
→ Ψf(k+1)
→ dxf(k+1)
→ dyf(k+1)
→ dzf(k+1)

→ P(k+1)

Fig.9D

Fig.10

Fig.11A

Fig.11B

Fig.11C

Fig.11D

Fig.11E

Fig.11F

Fig. 11 G

φ est (Degré)

TEMPS (sec)

Fig. 11 H

θ est (Degré)

TEMPS (sec)

Fig. 11 I

ψ est (Degré)

TEMPS (sec)

Fig.11J

Fig.11K

Fig.11L

Fig.12A

∝ss1 (Degré)

TEMPS (sec)

Fig.12B

∝ss2 (Degré)

TEMPS (sec)

Fig.12C

Φ,Ψ (Degré) d'aprés capteur de polaire

Ψsp

Φsp

Ψsp

Φsp

TEMPS (sec)

Fig.12D

Fig.12E

Fig.12F

Fig.12G

Fig.12H

Fig.12I

Fig.12 J

Fig.12 K

Fig.12 L

50